(19) Europäisches Patentamt
European Patent Office
Office européen des brevets

(11) EP 4 787 597 A1

(12) **EUROPEAN PATENT APPLICATION**
published in accordance with Art. 153(4) EPC

(43) Date of publication:
**05.08.2026 Bulletin 2026/32**

(21) Application number: **24885884.7**

(22) Date of filing: **01.11.2024**

(51) International Patent Classification (IPC):
***H01M 50/457** (2021.01)* ***H01M 50/414** (2021.01)*
***H01M 50/42** (2021.01)* ***H01M 50/426** (2021.01)*
***H01M 50/434** (2021.01)* ***H01M 50/443** (2021.01)*
***H01M 50/446** (2021.01)* ***H01M 50/451** (2021.01)*
***H01M 50/489** (2021.01)* ***H01M 50/491** (2021.01)*

(52) Cooperative Patent Classification (CPC):
**H01M 50/414; H01M 50/42; H01M 50/426; H01M 50/434; H01M 50/443; H01M 50/446; H01M 50/451; H01M 50/457; H01M 50/489; H01M 50/491;** Y02E 60/10

(86) International application number:
**PCT/JP2024/039135**

(87) International publication number:
**WO 2025/095120 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.11.2023 JP 2023188885**

(71) Applicant: **TEIJIN LIMITED**
**Kita-ku,**
**Osaka-shi,**
**Osaka 530-0005 (JP)**

(72) Inventor: **NISHIKAWA, Satoshi**
**Osaka-shi, Osaka 530-0005 (JP)**

(74) Representative: **Berggren Oy**
**P.O. Box 16**
**Fabianinkatu 21**
**00101 Helsinki (FI)**

(54) **SEPARATOR FOR NONAQUEOUS SECONDARY BATTERIES, AND NONAQUEOUS SECONDARY BATTERY**

(57) A separator for a non-aqueous secondary battery includes: a porous substrate; a heat-resistant layer disposed on one surface or both surfaces of the porous substrate and containing inorganic particles and a binder resin; and an adhesive layer disposed on one surface or both surfaces of a laminate including the porous substrate and the heat-resistant layer and containing a polyvinylidene fluoride-based resin, in which the inorganic particles have a mass proportion of 95 mass% or more in the heat-resistant layer, the inorganic particles contained in the heat-resistant layer have an average primary particle diameter of 0.01 μm to 0.30 μm, and the adhesive layer has a porous structure in which fibrils containing the polyvinylidene fluoride-based resin are connected in a three-dimensional network shape.

FIG.1

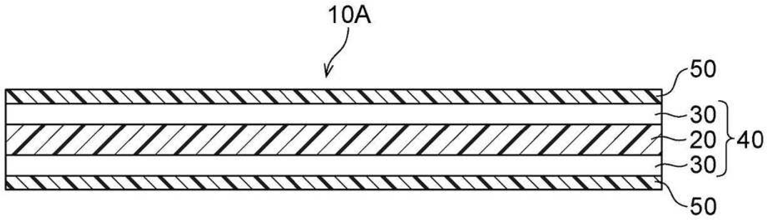




Processed by Luminess, 75001 PARIS (FR)

## Description

Technical Field

The present disclosure relates to a separator for a non-aqueous secondary battery and a non-aqueous secondary battery.

Background Art

Patent Literature 1 discloses a separator for a non-aqueous secondary battery including: a porous substrate; a heat-resistant porous layer provided on one surface or both surfaces of the porous substrate and containing a binder resin and inorganic particles having an average primary particle diameter of 0.01 μm or more and less than 0.45 μm; and an adhesive layer provided on one surface or both surfaces of a laminate including the porous substrate and the heat-resistant porous layer and containing adhesive resin particles adhering to the laminate.

Patent Literature 2 discloses a separator for a non-aqueous secondary battery including: a porous substrate; and an adhesive layer containing at least one selected from the group consisting of (i) adhesive resin particles containing a phenyl group-containing acrylic resin and a polyvinylidene fluoride-based resin, and (ii) a mixture of adhesive resin particles containing a phenyl group-containing acrylic resin and adhesive resin particles containing a polyvinylidene fluoride-based resin on one surface or both surfaces of the porous substrate.

Patent Literature 3 discloses a ceramic-polymer composite coating lithium ion separator including: a polyolefin porous separator; a ceramic coating layer with which one surface or both surfaces of the separator is coated; and a polymer coating layer with which a ceramic surface or a separator surface is coated.

Citation List

Patent Literature

Patent Literature 1: WO2020/246497
Patent Literature 2: JP2023-040938A
Patent Literature 3: JP2019-523518A

Summary of Invention

Technical Problem

An object of the present disclosure is to provide a separator for a non-aqueous secondary battery having excellent thermal dimensional stability and adhesiveness to an electrode and having improved cycle properties and impact resistance of a battery.

Solution to Problem

Specific means for solving the above problems include the following aspects.

<1> A separator for a non-aqueous secondary battery including:

a porous substrate;
a heat-resistant layer disposed on one surface or both surfaces of the porous substrate and containing inorganic particles and a binder resin; and
an adhesive layer disposed on one surface or both surfaces of a laminate including the porous substrate and the heat-resistant layer and containing a polyvinylidene fluoride-based resin, in which
the inorganic particles have a mass proportion of 95 mass% or more in the heat-resistant layer,
the inorganic particles contained in the heat-resistant layer have an average primary particle diameter of 0.01 μm to 0.30 μm, and
the adhesive layer has a porous structure in which fibrils containing the polyvinylidene fluoride-based resin are connected in a three-dimensional network shape.

<2> The separator for a non-aqueous secondary battery according to <1>, in which the heat-resistant layer is disposed on both surfaces of the porous substrate.
<3> The separator for a non-aqueous secondary battery according to <1> or <2>, in which the inorganic particles include at least one selected from the group consisting of metal oxide particles, metal hydroxide particles, and metal sulfate particles.
<4> The separator for a non-aqueous secondary battery according to <1> or <2>, in which the inorganic particles include barium sulfate particles.
<5> The separator for a non-aqueous secondary battery according to any one of <1> to <4>, in which

the polyvinylidene fluoride-based resin includes the following polyvinylidene fluoride-based resin A and polyvinylidene fluoride-based resin B,
polyvinylidene fluoride-based resin A: a polyvinylidene fluoride-based resin containing vinylidene fluoride and hexafluoropropylene as polymerization components and having a proportion of hexafluoropropylene of more than 1.5 mol% and 5 mol% or less in a total of vinylidene fluoride and hexafluoropropylene,
polyvinylidene fluoride-based resin B: a polyvinylidene fluoride-based resin containing vinylidene fluoride and hexafluoropropylene as polymerization components and having a proportion of hexafluoropropylene of more than 5 mol% and 15 mol% or less in a total of vinylidene fluoride and hexafluoropropylene.

<6> The separator for a non-aqueous secondary battery according to any one of <1> to <5>, in which

the polyvinylidene fluoride-based resin includes the following polyvinylidene fluoride-based resin C,
polyvinylidene fluoride-based resin C: a polyvinylidene fluoride-based resin containing, as polymerization components, vinylidene fluoride, hexafluoropropylene, and a monomer represented by a formula (1) to be described later.

<7> The separator for a non-aqueous secondary battery according to any one of <1> to <6>, in which the binder resin in the heat-resistant layer contains at least one selected from the group consisting of a butadiene-based polymer and an acrylic resin.
<8> The separator for a non-aqueous secondary battery according to any one of <1> to <7>, in which the heat-resistant layer has a thickness of 0.1 μm to 2 μm per layer.
<9> The separator for a non-aqueous secondary battery according to any one of <1> to <8>, in which the porous substrate has a thickness of 1 μm to 7 μm.
<10> The separator for a non-aqueous secondary battery according to any one of <1> to <9>, in which the adhesive layer has a mass per unit area of 0.5 $g/m^2$ to 3 $g/m^2$ in total of both surfaces.
<11> The separator for a non-aqueous secondary battery according to any one of <1> to <10>, in which a difference between a Gurley value of the laminate and a Gurley value of the separator for a non-aqueous secondary battery is 30 s/100 mL or less.
<12> A non-aqueous secondary battery that obtains an electromotive force by doping and de-doping a lithium ion, the non-aqueous secondary battery including:

a positive electrode;
a negative electrode; and
the separator for a non-aqueous secondary battery according to any one of <1> to <11> disposed between the positive electrode and the negative electrode.

Advantageous Effects of Invention

According to the present disclosure, there is provided a separator for a non-aqueous secondary battery having excellent thermal dimensional stability and adhesiveness to an electrode and having improved cycle properties and impact resistance of a battery.

Brief Description of Drawings

[FIG. 1] FIG. 1 is a schematic cross-sectional view of an example of a separator according to the present disclosure.
[FIG. 2] FIG. 2 is a schematic cross-sectional view of an example of the separator according to the present disclosure.
[FIG. 3] FIG. 3 is a schematic cross-sectional view of an example of the separator according to the present disclosure.

[FIG. 4] FIG. 4 is a schematic cross-sectional view of an example of the separator according to the present disclosure.
[FIG. 5] FIG. 5 is a schematic cross-sectional view of an example of the separator according to the present disclosure.
[FIG. 6] FIG. 6 is an SEM image of an embodiment example of an adhesive layer included in the separator according to the present disclosure.

Description of Embodiments

Hereinafter, embodiments of the present disclosure will be described. These descriptions and examples are illustrative of embodiments and do not limit the scope of the embodiments.

In the present disclosure, a numerical range indicated using "to" indicates a range including numerical values described before and after "to" as a minimum value and a maximum value, respectively.

In a numerical range described stepwise in the present disclosure, an upper limit value or a lower limit value described in one numerical range may be replaced with an upper limit value or a lower limit value of another numerical range described in a stepwise manner. In addition, in the numerical range described in the present disclosure, the upper limit value or the lower limit value of the numerical range may be replaced with a value shown in Examples.

In the present disclosure, "A and/or B" is synonymous with "at least one of A and B". That is, "A and/or B" means that it may be only A, may be only B, or may be a combination of A and B.

In the present disclosure, the term "step" includes not only an independent step but also a step that cannot be clearly distinguished from other steps as long as the purpose of the step is achieved.

In the present disclosure, in the case of referring to an amount of each component in a composition, when there are a plurality of substances corresponding to each component in the composition, the amount means a total amount of the plurality of substances present in the composition unless otherwise specified.

In the present disclosure, a plurality of kinds of particles corresponding to each component may be contained. When there are a plurality of kinds of particles corresponding to each component in the composition, a particle diameter of each component means a value of a mixture of the plurality of kinds of particles present in the composition unless otherwise specified.

In the present disclosure, MD (machine direction) means a longitudinal direction of a separator produced in a long shape, and TD (transverse direction) means a direction orthogonal to MD in a surface direction of the separator. In the present disclosure, TD is also referred to as a "width direction".

In the present disclosure, when a lamination relationship of layers constituting the separator is expressed by "upper" and "lower", the layer closer to a porous substrate is referred to as "lower", and the layer farther from the porous substrate is referred to as "upper".

In the present disclosure, a volume of the porous layer excluding pores is referred to as a "solid content volume".

In the present disclosure, performing a hot press treatment after impregnating the separator with an electrolyte solution is referred to as "wet heat press", and performing a hot press treatment without impregnating the separator with an electrolyte solution is referred to as "dry heat press".

In the present disclosure, a "monomer unit" of a polymer or a resin means a constituent unit of the polymer or the resin which is obtained by polymerizing a monomer.

In the present disclosure, the expression "(meth)acryl" means either "acryl" or "methacryl".

<Separator for Non-aqueous Secondary Battery>

A separator for a non-aqueous secondary battery according to the present disclosure (also simply referred to as a "separator" in the present disclosure) includes a porous substrate, a heat-resistant layer disposed on one surface or both surfaces of the porous substrate and containing inorganic particles and a binder resin, and an adhesive layer disposed on one surface or both surfaces of a laminate including the porous substrate and the heat-resistant layer and containing a polyvinylidene fluoride-based resin.

In the separator according to the present disclosure, the inorganic particles have a mass proportion of 95 mass% or more in the heat-resistant layer, the inorganic particles contained in the heat-resistant layer have an average primary particle diameter of 0.01 μm to 0.30 μm, and the adhesive layer has a porous structure in which fibrils containing the polyvinylidene fluoride-based resin are connected in a three-dimensional network shape.

With the separator according to the present disclosure having the above configuration, the separator has excellent thermal dimensional stability and adhesiveness to an electrode and has improved cycle properties and impact resistance of a battery.

The mass proportion of the inorganic particles in the heat-resistant layer is 95 mass% or more, preferably 96 mass% or more, and more preferably 97 mass% or more, from the viewpoint of the thermal dimensional stability of the separator and from the viewpoint of improving the impact resistance of the battery.

The mass proportion of the inorganic particles in the heat-resistant layer is preferably 99 mass% or less, and

more preferably 98 mass% or less, from the viewpoint of moldability of the heat-resistant layer. In other words, a mass proportion of the binder resin in the heat-resistant layer is preferably 1 mass% or more, and more preferably 2 mass% or more, from the viewpoint of the moldability of the heat-resistant layer.

The average primary particle diameter of the inorganic particles contained in the heat-resistant layer is 0.01 μm or more, preferably 0.05 μm or more, and more preferably 0.08 μm or more, from the viewpoint of ion permeability of the heat-resistant layer.

The average primary particle diameter of the inorganic particles contained in the heat-resistant layer is 0.30 μm or less, preferably 0.20 μm or less, and more preferably 0.15 μm or less, from the viewpoint of thinning the heat-resistant layer and from the viewpoint of the moldability of the heat-resistant layer containing a large amount of inorganic particles.

A content of the inorganic particles in the heat-resistant layer is 95 mass% or more for the purpose of improving the thermal dimensional stability of the separator and the impact resistance of the battery. In order to form a heat-resistant layer containing a large amount of inorganic particles and to mold the heat-resistant layer as thin as possible, the average primary particle diameter of the inorganic particles is 0.30 μm or less.

The adhesive layer contains a polyvinylidene fluoride-based resin and has a porous structure in which fibrils containing the polyvinylidene fluoride-based resin are connected in a three-dimensional network shape. With this structure, the adhesive layer has excellent ion permeability and excellent adhesiveness to the electrode. In addition, with this structure, the adhesive layer can be thinned while maintaining mechanical strength, and as a result, cycle properties of the battery are improved.

A layer configuration of the separator according to the present disclosure will be described with reference to the drawings.

Each of FIG. 1 to FIG. 5 is a schematic cross-sectional view of an embodiment example of the separator according to the present disclosure. FIG. 1 to FIG. 5 are schematic cross-sectional views mainly illustrating a lamination order of layers, and a structure of each layer is abstracted or simplified. In FIG. 1 to FIG. 5, layers having similar functions are denoted by the same reference numerals.

A separator 10A shown in FIG. 1 is a separator in which heat-resistant layers 30 are disposed on both surfaces of a porous substrate 20 and adhesive layers 50 are disposed on both surfaces of a laminate 40 including the porous substrate 20 and two heat-resistant layers 30. Components and/or compositions in one heat-resistant layer 30 and the other heat-resistant layer 30 may be the same as or different from each other. Components and/or compositions of one adhesive layer 50 and the other adhesive layer 50 may be the same as or different from each other.

A separator 10B shown in FIG. 2 is a separator in which the heat-resistant layers 30 are disposed on both surfaces of the porous substrate 20 and the adhesive layer 50 is disposed on one surface of the laminate 40 including the porous substrate 20 and two heat-resistant layers 30. Components and/or compositions in one heat-resistant layer 30 and the other heat-resistant layer 30 may be the same as or different from each other.

A separator 10C shown in FIG. 3 is a separator in which the heat-resistant layer 30 is disposed on one surface of the porous substrate 20 and the adhesive layers 50 are disposed on both surfaces of the laminate 40 including the porous substrate 20 and one heat-resistant layer 30. Components and/or compositions of one adhesive layer 50 and the other adhesive layer 50 may be the same as or different from each other.

A separator 10D shown in FIG. 4 is a separator in which the heat-resistant layer 30 is disposed on one surface of the porous substrate 20 and the adhesive layer 50 is disposed on one surface of the laminate 40 including the porous substrate 20 and one heat-resistant layer 30. In the separator 10D, the adhesive layer 50 is disposed on the surface of the heat-resistant layer 30.

A separator 10E shown in FIG. 5 is a separator in which the heat-resistant layer 30 is disposed on one surface of the porous substrate 20 and the adhesive layer 50 is disposed on one surface of the laminate 40 including the porous substrate 20 and one heat-resistant layer 30. In the separator 10E, the adhesive layer 50 is disposed on the surface of the porous substrate 20.

The heat-resistant layer 30 is a layer containing inorganic particles and a binder resin, and is a layer disposed on the surface of the porous substrate 20. The heat-resistant layer 30 may be provided only on one surface of the porous substrate 20 or may be provided on both surfaces of the porous substrate 20. When the heat-resistant layers 30 are provided on both surfaces of the porous substrate 20, the thermal dimensional stability of the separator is more excellent, and safety of the battery can be further improved. In addition, the separator is less likely to curl and has excellent handleability during production of the battery. When the heat-resistant layer 30 is provided only on one surface of the porous substrate 20, the ion permeability of the separator is more excellent. In addition, a thickness of the entire separator can be reduced, and a battery having a higher energy density can be produced.

The adhesive layer 50 is a layer containing a polyvinylidene fluoride-based resin, is a layer disposed on the surface of the porous substrate 20 or the heat-resistant layer 30, and is present as the outermost layer of the separator. The adhesive layer 50 may be provided only on one surface of the laminate 40 or on both surfaces of the laminate 40. When the adhesive layer 50 is provided only on one surface of the laminate 40, the adhesive layer 50 is preferably disposed on the surface of the heat-resistant layer 30. The adhesive layer 50 may be selected to be disposed on one surface or both

surfaces of the laminate 40 in accordance with a composition or surface properties of a positive electrode or a negative electrode of the battery. When the adhesive layer 50 is provided only on one surface of the laminate 40, the thickness of the entire separator can be reduced, and a battery having a higher energy density can be produced.

Hereinafter, details of the porous substrate, the heat-resistant layer, and the adhesive layer of the separator according to the present disclosure will be described.

[Porous Substrate]

In the present disclosure, the porous substrate means a substrate having pores or voids therein. Examples of such a substrate include: a microporous film; a porous sheet composed of a fibrous material, such as a non-woven fabric and paper; and a composite porous sheet in which one or more other porous layers are laminated on the microporous film or the porous sheet. In the present disclosure, a microporous film is preferred from the viewpoint of thinning and strength of the separator. The microporous film means a film having a large number of micropores therein, having a structure in which the micropores are connected to each other and allowing a gas or a liquid to pass from one surface to the other surface.

A material of the porous substrate is preferably an electrically insulating material.

The porous substrate preferably contains a thermoplastic resin, in order to impart a shutdown function to the porous substrate. The shutdown function refers to a function of dissolving a constituent material to clog the pores of the porous substrate, thereby blocking ion migration and preventing thermal runaway of the battery, when a battery temperature is raised. The thermoplastic resin is preferably a thermoplastic resin having a melting point lower than 200°C. Examples of the thermoplastic resin include a polyester such as polyethylene terephthalate, and a polyolefin such as a polyethylene and a polypropylene, and among these, a polyolefin is preferred.

The porous substrate is preferably a microporous film containing a polyolefin (referred to as a "polyolefin microporous film" in the present disclosure). Examples of the polyolefin microporous film include polyolefin microporous films applicable to a separator for a battery in the related art, and among these, one having sufficient mechanical properties and ion permeability is preferably selected.

From the viewpoint of exhibiting the shutdown function, the polyolefin microporous film is preferably a microporous film containing a polyethylene, and a content of the polyethylene is preferably 95 mass% or more with respect to a mass of the entire polyolefin microporous film.

The polyolefin microporous film is preferably a microporous film containing a polypropylene from the viewpoint of imparting heat resistance to the extent that the film is less likely to break when exposed to a high temperature.

The polyolefin microporous film is preferably a polyolefin microporous film containing a polyethylene and a polypropylene, from the viewpoint of imparting the shutdown function and the heat resistance to the extent that the film is less likely to break when exposed to a high temperature. Examples of the polyolefin microporous film containing a polyethylene and a polypropylene include a microporous film in which a polyethylene and a polypropylene are mixed in one layer. The microporous film preferably contains 95 mass% or more of the polyethylene and 5 mass% or less of the polypropylene, from the viewpoint of achieving both the shutdown function and the heat resistance. In addition, a polyolefin microporous film having a lamination structure with two or more layers in which at least one layer contains a polyethylene and at least one layer contains a polypropylene is also preferred from the viewpoint of achieving both the shutdown function and the heat resistance.

The polyolefin contained in the polyolefin microporous film is preferably a polyolefin having a weight-average molecular weight (Mw) of 100,000 to 5,000,000. When the Mw of the polyolefin is 100,000 or more, sufficient mechanical properties can be imparted to the microporous film. On the other hand, when the Mw of the polyolefin is 5,000,000 or less, shutdown properties of the microporous film is favorable, and the microporous film is likely to mold.

Examples of a method for producing the polyolefin microporous film include: a method of extruding a molten polyolefin resin from a T-die to form a sheet, crystallizing and then stretching the sheet, and then subjecting the stretched sheet to a heat treatment, thereby obtaining a microporous film; and a method of extruding a polyolefin resin melted with a plasticizer such as liquid paraffin from a T-die, cooling the resin to form a sheet, stretching the sheet, then extracting the plasticizer, and subjecting the stretched sheet to a heat treatment, thereby obtaining a microporous film.

Examples of the porous sheet composed of a fibrous material include porous sheets, such as a non-woven fabric and paper, composed of fibrous materials, including polyesters such as polyethylene terephthalate, polyolefins such as a polyethylene and a polypropylene, heat-resistant resins such as a wholly aromatic polyamide, a polyamideimide, a polyimide, a polyethersulfone, a polysulfone, a polyetherketone, and a polyetherimide, and celluloses.

In the present disclosure, the heat-resistant resin refers to a resin having a melting point of 200°C or higher or a resin having no melting point and having a decomposition temperature of 200°C or higher. That is, the heat-resistant resin in the present disclosure is a resin that is not melted or decomposed in a temperature range of lower than 200°C.

Examples of the composite porous sheet include a sheet in which a functional layer is laminated on a microporous film or a porous sheet composed of a fibrous material. Such a composite porous sheet is preferred from the viewpoint that a function can be further added with the functional layer. Examples of the functional layer include a porous layer composed of

a heat-resistant resin from the viewpoint of imparting the heat resistance. Examples of the heat-resistant resin include one kind or two or more kinds of heat-resistant resins selected from a wholly aromatic polyamide, a polyamideimide, a polyimide, a polyethersulfone, a polysulfone, a polyetherketone, and a polyetherimide. Examples of a method of forming the composite porous sheet include a method of coating a microporous film or a porous sheet with a functional layer, a method of bonding a microporous film or a porous sheet and a functional layer with an adhesive, and a method of thermally press-bonding a microporous film or a porous sheet with a functional layer.

The surface of the porous substrate may be subjected to various surface treatments within the range of not impairing the nature of the porous substrate, for the purpose of improving wettability with a coating liquid for forming the heat-resistant layer or the adhesive layer. Examples of the surface treatment include a corona treatment, a plasma treatment, a flame treatment, and a UV irradiation treatment.

-Properties of Porous Substrate-

A thickness of the porous substrate is preferably 1 μm or more, more preferably 3 μm or more, and still more preferably 5 μm or more, from the viewpoint of the mechanical strength.

The thickness of the porous substrate is preferably 7 μm or less, and more preferably 6 μm or less, from the viewpoint of increasing the energy density of the battery.

The thickness of the porous substrate is determined by measuring thicknesses at 20 points in a 10-cm square using a contact-type thickness meter and taking an average thereof.

A Gurley value of the porous substrate is preferably 30 s/100 mL or more, more preferably 50 s/100 mL or more, and still more preferably 70 s/100 mL or more, from the viewpoint of suppressing a short circuit of the battery.

The Gurley value of the porous substrate is preferably 200 s/100 mL or less, more preferably 180 s/100 mL or less, and still more preferably 160 s/100 mL or less, from the viewpoint of the ion permeability and from the viewpoint of suppressing clogging of the porous structure at a boundary between the porous substrate and the heat-resistant layer or the adhesive layer when exposed to a high temperature.

The Gurley value of the porous substrate is determined by measurement using a Gurley densometer according to JIS P8117:2009.

A porosity of the porous substrate is preferably 30% to 60% from the viewpoint of the ion permeability.

The porosity ε (%) of the porous substrate is determined according to the following equation.

$$\varepsilon = \{1 - Ws/(ds \cdot t)\} \times 100$$

Here, Ws is a basis weight (g/m$^2$) of the porous substrate, ds is a true density (g/cm$^3$) of the porous substrate, and t is the thickness (μm) of the porous substrate. The basis weight refers to the mass per unit area.

[Heat-resistant Layer]

The heat-resistant layer contains at least inorganic particles and a binder resin.

-Inorganic Particles-

Examples of the inorganic particles include metal oxide particles, metal hydroxide particles, metal sulfate particles, metal carbonate particles, metal nitride particles, and clay mineral particles.

Examples of a metal oxide constituting the metal oxide particles include silica, alumina, boehmite (alumina monohydrate), titania, zirconia, magnesium oxide, and barium oxide, and alumina is preferred.

Examples of a metal hydroxide constituting the metal hydroxide particles include magnesium hydroxide, aluminum hydroxide, calcium hydroxide, chromium hydroxide, zirconium hydroxide, cerium hydroxide, nickel hydroxide, and boron hydroxide, and magnesium hydroxide is preferred.

Examples of a metal sulfate constituting the metal sulfate particles include barium sulfate and calcium sulfate, and barium sulfate is preferred.

Examples of a metal carbonate constituting the metal carbonate particles include calcium carbonate, magnesium carbonate, and barium carbonate.

Examples of a metal nitride constituting the metal nitride particles include boron nitride and aluminum nitride.

Examples of the clay mineral particles include calcium silicate and talc.

The inorganic particles may be inorganic particles surface-modified with a silane coupling agent or the like.

One kind of the inorganic particles may be used alone, or a combination of two or more kinds thereof may be used.

The inorganic particles are preferably at least one selected from the group consisting of metal oxide particles,

metal hydroxide particles, and metal sulfate particles from the viewpoint of stability to an electrolyte solution and electrochemical stability.

As the inorganic particles, metal sulfate particles are preferred, and barium sulfate particles are more preferred, from the viewpoint that the particles are less likely to decompose the electrolyte solution or an electrolyte and is thus less likely to cause gas generation in the battery.

A particle shape of the inorganic particles is not limited and may be any of a spherical shape, an elliptical shape, a plate shape, a needle shape, and an indefinite shape. The inorganic particles contained in the heat-resistant layer are preferably plate-shaped particles or non-aggregated primary particles from the viewpoint of suppressing a short circuit of the battery.

The average primary particle diameter of the inorganic particles contained in the heat-resistant layer is 0.01 μm to 0.30 μm, preferably 0.05 μm to 0.20 μm, and more preferably 0.08 μm to 0.15 μm.

The average primary particle diameter of the inorganic particles is determined by measuring major diameters of 100 inorganic particles randomly selected in observation using a scanning electron microscope (SEM) and averaging the major diameters of the 100 particles. A sample subjected to the SEM observation is inorganic particles as a material forming the heat-resistant layer or inorganic particles extracted from the heat-resistant layer. A method for extracting the inorganic particles from the heat-resistant layer is not limited. Examples of the method include: a method of immersing the heat-resistant layer peeled off from the separator in an organic solvent that dissolves a binder resin, dissolving the binder resin in the organic solvent, and extracting the inorganic particles; and a method of heating the heat-resistant layer peeled off from the separator to about 800°C to eliminate the binder resin and extracting the inorganic particles.

A density ($g/cm^3$) of the inorganic particles is preferably 1.5 to 11.0, more preferably 2.0 to 5.5, and still more preferably 3.5 to 5.0, from the viewpoint of setting the content of the inorganic particles in the heat-resistant layer to 95 mass% or more and from the viewpoint of temporal stability and coatability of a heat-resistant layer forming coating liquid.

The mass proportion of the inorganic particles in the heat-resistant layer is 95 mass% or more, preferably 96 mass% to 99 mass%, and more preferably 97 mass% to 98 mass% or less.

When the inorganic particles are barium sulfate particles, the mass proportion of the barium sulfate particles in the heat-resistant layer is preferably 95 mass% or more, more preferably 96 mass% to 99 mass%, and still more preferably 97 mass% to 98 mass% or less.

When the heat-resistant layers are disposed on both surfaces of the porous substrate, the kind and/or the content of the inorganic particles contained in one heat-resistant layer may be the same as or different from the kind and/or the content of the inorganic particles contained in the other heat-resistant layer.

-Organic Particles-

The heat-resistant layer may contain organic particles. Examples of the organic particles include: particles composed of a crosslinked polymer such as a crosslinked poly(meth)acrylic acid, a crosslinked poly(meth)acrylic acid ester, a crosslinked polysilicone, a crosslinked polystyrene, a crosslinked polydivinylbenzene, a styrenedivinylbenzene copolymer crosslinked product, a melamine resin, a phenol resin, and a benzoguanamine-formaldehyde condensate; and particles composed of a heat-resistant polymer such as a polysulfone, a polyacrylonitrile, an aramid, and a polyacetal.

The resin constituting the organic particles may be a mixture, a modified product, a derivative, a copolymer (a random copolymer, an alternating copolymer, a block copolymer, or a graft copolymer), or a crosslinked product of the above exemplary materials.

One kind of the organic particles may be used alone, or a combination of two or more kinds thereof may be used.

-Binder Resin-

The binder resin contained in the heat-resistant layer has an effect of binding the inorganic particles contained in the heat-resistant layer to each other, an effect of bonding the heat-resistant layer to the porous substrate, an effect of bonding the heat-resistant layer to the electrode, and an effect of improving the heat resistance of the heat-resistant layer. The binder resin contained in the heat-resistant layer may have a particle shape in the heat-resistant layer, may not have a specific shape, and may have any form as long as it can bind the inorganic particles to each other.

The binder resin contained in the heat-resistant layer preferably contains at least one selected from the group consisting of a butadiene-based polymer and an acrylic resin from the viewpoint of binding a large amount of inorganic particles.

Examples of the butadiene-based polymer include a homopolymer of butadiene and a copolymer of butadiene and a styrene-based monomer (that is, a styrene-butadiene copolymer). One kind of the resin may be used alone, or a combination of two or more kinds thereof may be used.

Examples of the styrene-based monomer constituting the styrene-butadiene copolymer include: styrene, α-methylstyrene; an alkyl-substituted styrene such as 2-methylstyrene, 3-methylstyrene, 4-methylstyrene, 2-ethylstyrene,

3-ethylstyrene, and 4-ethylstyrene; a halogen-substituted styrene such as 2-chlorostyrene, 3-chlorostyrene, and 4-chlorostyrene; and a fluorine-substituted styrene such as 4-fluorostyrene and 2,5-difluorostyrene. The styrene-based monomer is preferably styrene or α-methylstyrene, and more preferably styrene. One kind of the styrene-based monomer may be used alone, or two or more kinds thereof may be used.

A small amount of an acrylic monomer may be copolymerized in the styrene-butadiene copolymer. The acrylic monomer is preferably a (meth)acrylic acid alkyl ester. An alkyl group in an ester moiety of the (meth)acrylic acid alkyl ester is preferably an alkyl group having 1 to 10 carbon atoms, and more preferably an alkyl group having 1 to 8 carbon atoms. Specific examples of the acrylic monomer include methyl (meth)acrylate, ethyl (meth)acrylate, isopropyl (meth)acrylate, n-butyl (meth)acrylate, and 2-ethylhexyl (meth)acrylate. One kind of the acrylic monomer may be used alone, or a combination of two or more kinds thereof may be used.

Examples of the acrylic resin include: a homopolymer or a copolymer of an acrylic monomer; and a copolymer of an acrylic monomer and a styrene-based monomer. One kind of the resin may be used alone, or a combination of two or more kinds thereof may be used.

Examples of the acrylic monomer of the acrylic resin include (meth)acrylic acid, methyl (meth)acrylate, ethyl (meth)acrylate, isopropyl (meth)acrylate, n-butyl (meth)acrylate, isobutyl (meth)acrylate, t-butyl (meth)acrylate, n-hexyl (meth)acrylate, 2-ethylhexyl (meth)acrylate, lauryl (meth)acrylate, stearyl (meth)acrylate, cyclohexyl (meth)acrylate, dicyclopentanyl (meth)acrylate, isobornyl (meth)acrylate, 2-hydroxyethyl (meth)acrylate, hydroxypropyl (meth)acrylate, and 4-hydroxybutyl (meth)acrylate. The acrylic monomer is preferably a (meth)acrylic acid alkyl ester. The alkyl group in the ester moiety of the (meth)acrylic acid alkyl ester is preferably an alkyl group having 1 to 10 carbon atoms, and more preferably an alkyl group having 1 to 8 carbon atoms. One kind of the acrylic monomer may be used alone, or a combination of two or more kinds thereof may be used.

Examples of the styrene-based monomer of the acrylic resin include: styrene, α-methylstyrene; an alkyl-substituted styrene such as 2-methylstyrene, 3-methylstyrene, 4-methylstyrene, 2-ethylstyrene, 3-ethylstyrene, and 4-ethylstyrene; a halogen-substituted styrene such as 2-chlorostyrene, 3-chlorostyrene, and 4-chlorostyrene; and a fluorine-substituted styrene such as 4-fluorostyrene and 2,5-difluorostyrene. The styrene-based monomer is preferably styrene or α-methylstyrene, and more preferably styrene. One kind of the styrene-based monomer may be used alone, or a combination of two or more kinds thereof may be used.

The heat-resistant layer may contain a resin other than the butadiene-based polymer and the acrylic resin. Examples of the other resin include a wholly aromatic polyamide (also referred to as an aramid), a polyamideimide, a poly-N-vinylacetamide, a polyacrylamide, a copolymerized polyether polyamide, a polyimide, a polyetherimide, a fluorine-based resin, a homopolymer or a copolymer of a vinyl nitrile compound (such as acrylonitrile or methacrylonitrile), carboxymethyl cellulose, a hydroxyalkyl cellulose, a polyvinyl alcohol, a polyvinyl butyral, a polyvinyl pyrrolidone, a polyether (such as polyethylene oxide or polypropylene oxide), a polysulfone, a polyketone, a polyetherketone, a polyethersulfone, and a mixture thereof. One kind of the resin may be used alone, or a combination of two or more kinds thereof may be used.

A mass proportion of the other resin in all resins of the heat-resistant layer is preferably 10 mass% or less, more preferably 5 mass% or less, and still more preferably 1 mass% or less, and the other resin is particularly preferably not substantially contained.

A total mass proportion of the butadiene-based polymer and the acrylic resin in all resins of the heat-resistant layer is preferably 90 mass% or more, more preferably 95 mass% or more, still more preferably 99 mass% or more, and particularly preferably 100 mass%.

The mass proportion of the binder resin in the heat-resistant layer is preferably 1 mass% or more, and more preferably 2 mass% or more, from the viewpoint of the moldability of the heat-resistant layer.

The mass proportion of the binder resin in the heat-resistant layer is preferably 5 mass% or less, more preferably 4 mass% or less, and still more preferably 3 mass%, from the viewpoint of increasing the content of the inorganic particles in the heat-resistant layer.

When the heat-resistant layers are disposed on both surfaces of the porous substrate, the kind and/or the content of the binder resin contained in one heat-resistant layer may be the same as or different from the kind and/or the content of the binder resin contained in the other heat-resistant layer.

-Other Components-

The heat-resistant layer may contain an additive, for example, a dispersant such as a surfactant, a wetting agent, an antifoaming agent, or a pH adjuster. The dispersant is added to a coating liquid for forming the heat-resistant layer for the purpose of improving dispersibility, the coatability, or storage stability. The wetting agent, the antifoaming agent, or the pH adjuster is added to the coating liquid for forming the heat-resistant layer, for example, for the purpose of improving compatibility with the porous substrate, for the purpose of suppressing mixing of air into the coating liquid, or for the purpose of adjusting the pH.

-Properties of Heat-resistant Layer-

A thickness per layer of the heat-resistant layer is preferably 0.1 μm or more, more preferably 0.5 μm or more, and still more preferably 0.8 μm or more, from the viewpoint of the heat resistance of the battery.
The thickness per layer of the heat-resistant layer is preferably 2 μm or less, more preferably 1.5 μm or less, and still more preferably 1.2 μm or less, from the viewpoint of the ion permeability and the energy density of the battery.
When the heat-resistant layers are disposed on both surfaces of the porous substrate, the thickness of the heat-resistant layer is preferably 0.2 μm or more, more preferably 1.0 μm or more, still more preferably 1.5 μm or more, and is preferably 4 μm or less, more preferably 3 μm or less, still more preferably 2.5 μm or less, in total of both surfaces.
The thickness of the heat-resistant layer is a value obtained by subtracting the thickness of the porous substrate from a thickness of a flat film obtained by removing the adhesive layer from the separator. The thickness of the flat film obtained by peeling off the adhesive layer from the separator is determined by measuring thicknesses at 20 points in a 10-cm square using a contact-type thickness meter and taking an average thereof.
A porosity of the heat-resistant layer is preferably 20% to 70% from the viewpoint of the ion permeability.
The porosity ε (%) of the heat-resistant layer is determined according to the following equation.

[Math. 1]

$$\varepsilon = \left(1 - \frac{\sum_{i=1}^{n} \frac{Wi}{di}}{t}\right) \times 100$$

Here, regarding a constituent material 1, a constituent material 2, a constituent material 3, ..., and a constituent material n of the heat-resistant layer, the mass per unit area of each constituent material is $W_1$, $W_2$, $W_3$, ..., and $W_n$ (g/cm$^2$), the true density of each constituent material is $d_1$, $d_2$, $d_3$, ..., and $d_n$ (g/cm$^3$), and the thickness of the heat-resistant layer is t (cm).

[Adhesive Layer]

The adhesive layer is a layer disposed on the surface of the heat-resistant layer or the porous substrate and is present as the outermost layer of the separator. The adhesive layer has a large number of gaps or micropores and is a layer through which a gas or a liquid can pass from one surface to the other surface.

-Polyvinylidene Fluoride-based Resin-

The adhesive layer contains a polyvinylidene fluoride-based resin. Examples of the polyvinylidene fluoride-based resin include: a homopolymer of vinylidene fluoride (that is, polyvinylidene fluoride); a copolymer of vinylidene fluoride and a halogen-containing monomer, such as hexafluoropropylene, tetrafluoroethylene, trifluoroethylene, chlorotrifluoroethylene, vinyl fluoride, and trichloroethylene; a copolymer of vinylidene fluoride and a monomer other than the halogen-containing monomer; a copolymer of vinylidene fluoride, a halogen-containing monomer, and a monomer other than the halogen-containing monomer; and a mixture thereof. One kind of the polyvinylidene fluoride-based resin may be used alone, or a combination of two or more kinds thereof may be used.
As the polyvinylidene fluoride-based resin, a copolymer of vinylidene fluoride (VDF) and hexafluoropropylene (HFP) (VDF-HFP copolymer) is preferred from the viewpoint of the adhesiveness to the electrode. In the present disclosure, the VDF-HFP copolymer includes both a copolymer obtained by polymerizing only VDF and HFP and a copolymer obtained by polymerizing VDF, HFP, and another monomer. In the VDF-HFP copolymer, by increasing or decreasing a content of HFP, crystallinity, the heat resistance, resistance to dissolution in an electrolyte solution, and the like of the copolymer can be controlled within an appropriate range.
The polyvinylidene fluoride-based resin preferably includes a polyvinylidene fluoride-based resin A and a polyvinylidene fluoride-based resin B.
In the present disclosure, the polyvinylidene fluoride-based resin A means a polyvinylidene fluoride-based resin containing VDF and HFP as polymerization components and having a proportion of HFP of more than 1.5 mol% and 5 mol% or less in a total of VDF and HFP.
In the present disclosure, the polyvinylidene fluoride-based resin B means a polyvinylidene fluoride-based resin

containing VDF and HFP as polymerization components and having a proportion of HFP of more than 5 mol% and 15 mol% or less in a total of VDF and HFP.

The polyvinylidene fluoride-based resin A may contain other monomers other than VDF and HFP as polymerization components. Examples of the other monomers include a halogen-containing monomer such as tetrafluoroethylene, trifluoroethylene, chlorotrifluoroethylene, vinyl fluoride, and trichloroethylene, and a monomer represented by a formula (1) to be described later.

When the polyvinylidene fluoride-based resin A contains the monomer represented by the formula (1) in the polymerization component, the polyvinylidene fluoride-based resin A is also a polyvinylidene fluoride-based resin C.

As the halogen-containing monomer constituting the polyvinylidene fluoride-based resin A, VDF and HFP are preferably main monomers. A total of VDF and HFP constituting the polyvinylidene fluoride-based resin A is preferably 80 mol% or more, more preferably 90 mol% or more, and still more preferably 100 mol% with respect to a total of halogen-containing monomers.

In the polyvinylidene fluoride-based resin A, the proportion of HFP in the total of VDF and HFP is more than 1.5 mol% and 5 mol% or less, and preferably more than 1.5 mol% and 4 mol% or less. When the proportion of HFP in the polyvinylidene fluoride-based resin A is in this range, a fine porous structure is likely to develop in the adhesive layer, and excessive swelling of the VDF-HFP copolymer into the electrolyte solution can be suppressed, so that clogging of the pores is less likely to occur, and thus the cycle properties of the battery are excellent.

The polyvinylidene fluoride-based resin B may contain other monomers other than VDF and HFP as polymerization components. Examples of the other monomers include a halogen-containing monomer such as tetrafluoroethylene, trifluoroethylene, chlorotrifluoroethylene, vinyl fluoride, and trichloroethylene, and the monomer represented by the formula (1) to be described later.

When the polyvinylidene fluoride-based resin B contains the monomer represented by the formula (1) in the polymerization component, the polyvinylidene fluoride-based resin B is also the polyvinylidene fluoride-based resin C.

As the halogen-containing monomer constituting the polyvinylidene fluoride-based resin B, VDF and HFP are preferably main monomers. A total of VDF and HFP constituting the polyvinylidene fluoride-based resin A is preferably 80 mol% or more, more preferably 90 mol% or more, and still more preferably 100 mol% with respect to a total of halogen-containing monomers.

In the polyvinylidene fluoride-based resin B, the proportion of HFP in the total of VDF and HFP is more than 5 mol% and 15 mol% or less, and preferably more than 5 mol% and 10 mol% or less. When the proportion of HFP in the polyvinylidene fluoride-based resin B is in this range, the porosity and an average pore diameter of the adhesive layer do not become too large, and high mobility of a polymer chain during heating and ease of swelling into the electrolyte solution are ensured, and thus adhesion between the adhesive layer and the electrode is excellent by either dry heat press or wet heat press.

Each of the polyvinylidene fluoride-based resins A and B preferably has a weight-average molecular weight (Mw) of 400,000 to 2,000,000.

When the Mw of each of the polyvinylidene fluoride-based resins A and B is 400,000 or more, it is possible to ensure mechanical properties in which the adhesive layer can withstand an adhesion treatment to the electrode, and to be excellent in adhesion to the electrode. From this viewpoint, the Mw of each of the polyvinylidene fluoride-based resins A and B is more preferably 500,000 or more, still more preferably 600,000 or more, and still more preferably 700,000 or more.

When the Mw of each of the polyvinylidene fluoride-based resins A and B is 2,000,000 or less, the resin is likely to be softened by hot press, so that the adhesive layer is likely to bond to the electrode, a viscosity of a coating liquid for coating and molding the adhesive layer does not become too high, the moldability and crystal formation are favorable, and the porosity of the adhesive layer is favorable. From this viewpoint, the Mw of each of the polyvinylidene fluoride-based resins A and B is more preferably 1,500,000 or less, and still more preferably 1,200,000 or less.

The polyvinylidene fluoride-based resin A and the polyvinylidene fluoride-based resin B preferably have a Mw of 600,000 or more, respectively. When the Mw of each of the two resins is 600,000 or more, the thermal dimensional stability of the adhesive layer is excellent, and as a result, deformation when the battery is stored at a high temperature is suppressed. From this viewpoint, the Mw of each of the two resins is preferably 700,000 or more, and more preferably 800,000 or more.

A weight average of the Mw of the polyvinylidene fluoride-based resin A contained in the adhesive layer and the Mw of the polyvinylidene fluoride-based resin B contained in the adhesive layer (an average obtained by weighting the Mw of the two resins by a content ratio (on a mass basis)) is preferably 600,000 or more and 2,000,000 or less from the viewpoint of excellent adhesion to the electrode. A lower limit value of the weight average is more preferably 700,000 or more, still more preferably 800,000 or more, and even more preferably 900,000 or more. An upper limit value of the weight average is more preferably 1,500,000 or less, still more preferably 1,200,000 or less, and even more preferably 1,100,000 or less.

The content ratio of the polyvinylidene fluoride-based resin A to the polyvinylidene fluoride-based resin B in the adhesive layer (polyvinylidene fluoride-based resin A: polyvinylidene fluoride-based resin B) is preferably 15:85 to 85:15

on a mass basis. That is, the proportion of the polyvinylidene fluoride-based resin A in a total amount of the polyvinylidene fluoride-based resin A and the polyvinylidene fluoride-based resin B is preferably 15 mass% to 85 mass% (the proportion of the polyvinylidene fluoride-based resin B is preferably 15 mass% to 85 mass%).

When the polyvinylidene fluoride-based resin A is 15 mass% or more in the total amount of the polyvinylidene fluoride-based resin A and the polyvinylidene fluoride-based resin B, a fine porous structure is likely to develop in the adhesive layer, and excessive swelling of the VDF-HFP copolymer into the electrolyte solution can be suppressed, so that the clogging of the pores is less likely to occur. On the other hand, when the polyvinylidene fluoride-based resin B is 15 mass% or more in the total amount of the polyvinylidene fluoride-based resin A and the polyvinylidene fluoride-based resin B, high mobility of the polymer chain during heating and ease of swelling into the electrolyte solution are ensured. Therefore, when the content ratio of the polyvinylidene fluoride-based resin A to the polyvinylidene fluoride-based resin B is in the range of 15:85 to 85:15, a balance between the behavior of the VDF-HFP copolymer as the polymer and surface morphology of the adhesive layer is favorable, the adhesion between the adhesive layer and the electrode is excellent by either dry heat press or wet heat press, and the cycle properties and the dimensional stability of the battery are excellent.

From the above viewpoint, the proportion of the polyvinylidene fluoride-based resin A is preferably 15 mass% or more, more preferably 20 mass% or more, still more preferably 25 mass% or more, even more preferably 30 mass% or more, and even still more preferably 40 mass% or more. From the above viewpoint, the proportion of the polyvinylidene fluoride-based resin B is preferably 15 mass% or more, more preferably 20 mass% or more, still more preferably 25 mass% or more, even more preferably 30 mass% or more, and even still more preferably 40 mass% or more.

The content ratio of the polyvinylidene fluoride-based resin A to the polyvinylidene fluoride-based resin B in the adhesive layer (polyvinylidene fluoride-based resin A: polyvinylidene fluoride-based resin B) is more preferably 20:80 to 80:20, still more preferably 25:75 to 75:25, even more preferably 30:70 to 70:30, and even still more preferably 40:60 to 60:40 on a mass basis.

When the adhesive layer contains the polyvinylidene fluoride-based resins A and B, a total proportion of the polyvinylidene fluoride-based resins A and B in the entire polyvinylidene fluoride-based resin contained in the adhesive layer is preferably 20 mass% to 80 mass%, more preferably 30 mass% to 70 mass%, and still more preferably 40 mass% to 60 mass%.

The polyvinylidene fluoride-based resin preferably contains the polyvinylidene fluoride-based resin C from the viewpoint of excellent adhesion to the electrode by wet heat press.

In the present disclosure, the polyvinylidene fluoride-based resin C means a polyvinylidene fluoride-based resin containing vinylidene fluoride, hexafluoropropylene, and the monomer represented by the following formula (1) as polymerization components. The polyvinylidene fluoride-based resin C may be the polyvinylidene fluoride-based resin A, the polyvinylidene fluoride-based resin B, or may be neither the polyvinylidene fluoride-based resin A or the polyvinylidene fluoride-based resin B.

[Chem. 1]

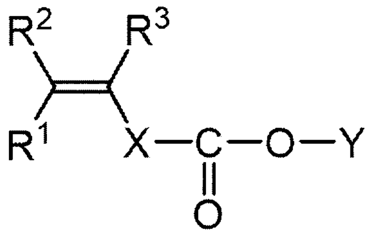

(1)

In the formula (1), $R^1$, $R^2$, and $R^3$ each independently represent a hydrogen atom, a halogen atom, an alkyl group having 1 to 5 carbon atoms, a carboxy group, or a derivative of a carboxy group, X represents a single bond, an alkylene group having 1 to 5 carbon atoms, or an alkylene group having 1 to 5 carbon atoms and having a substituent, and Y represents a hydrogen atom, an alkyl group having 1 to 5 carbon atoms, an alkyl group having 1 to 5 carbon atoms substituted with at least one hydroxy group, an alkyl group having 1 to 5 carbon atoms substituted with at least one carboxy group, or $-R-O-C(=O)-(CH_2)_n-C(=O)-OH$ (R represents an alkylene group having 1 to 5 carbon atoms, and n represents an integer of 0 or more).

The halogen atom represented by $R^1$, $R^2$, and $R^3$ in the formula (1) may be any of a fluorine atom, a chlorine atom, a bromine atom, and an iodine atom, and a fluorine atom is preferred.

Examples of the alkyl group having 1 to 5 carbon atoms represented by $R^1$, $R^2$, and $R^3$ in the formula (1) include: a methyl group, an ethyl group, an n-propyl group, an n-butyl group, and an n-pentyl group, which are linear alkyl groups; and an isopropyl group, an isobutyl group, a sec-butyl group, a tert-butyl group, an isopentyl group, a neopentyl group, and a tert-pentyl group, which are branched alkyl groups. The alkyl group having 1 to 5 carbon atoms as $R^1$, $R^2$, and $R^3$ is

preferably an alkyl group having 1 to 4 carbon atoms, and more preferably an alkyl group having 1 to 3 carbon atoms.

Examples of the derivative of the carboxy group represented by $R^1$, $R^2$, and $R^3$ in the formula (1) include - C (=O) -$OR^4$ ($R^4$ represents an alkyl group). Examples of $R^4$ include: a methyl group, an ethyl group, an n-propyl group, an n-butyl group, and an n-pentyl group, which are linear alkyl groups; and an isopropyl group, an isobutyl group, a sec-butyl group, a tert-butyl group, an isopentyl group, a neopentyl group, and a tert-pentyl group, which are branched alkyl groups. $R^4$ is preferably an alkyl group having 1 to 5 carbon atoms, more preferably an alkyl group having 1 to 4 carbon atoms, and still more preferably an alkyl group having 1 to 3 carbon atoms.

Examples of the alkylene group having 1 to 5 carbon atoms represented by X in the formula (1) include: a methylene group, an ethylene group, an n-propylene group, an n-butylene group, and an n-pentylene group, which are linear alkylene groups; and an isopropylene group, an isobutylene group, a sec-butylene group, a tert-butylene group, an isopentylene group, a neopentylene group, and a tert-pentylene group, which are branched alkylene groups. The alkylene group having 1 to 5 carbon atoms as X is preferably an alkylene group having 1 to 4 carbon atoms, and more preferably an alkylene group having 1 to 3 carbon atoms.

Examples of the substituent in the alkylene group having 1 to 5 carbon atoms having a substituent represented by X in the formula (1) include a halogen atom, and may be any of a fluorine atom, a chlorine atom, a bromine atom, and an iodine atom. Examples of the substituted alkylene group having 1 to 5 carbon atoms as X include: a methylene group, an ethylene group, an n-propylene group, an n-butylene group, and an n-pentylene group, which are linear alkylene groups; and an isopropylene group, an isobutylene group, a sec-butylene group, a tert-butylene group, an isopentylene group, a neopentylene group, and a tert-pentylene group, which are branched alkylene groups. The substituted alkylene group having 1 to 5 carbon atoms as X is preferably an alkylene group having 1 to 4 carbon atoms, and more preferably an alkylene group having 1 to 3 carbon atoms.

Examples of the alkyl group having 1 to 5 carbon atoms represented by Y in the formula (1) include: a methyl group, an ethyl group, an n-propyl group, an n-butyl group, and an n-pentyl group, which are linear alkyl groups; and an isopropyl group, an isobutyl group, a sec-butyl group, a tert-butyl group, an isopentyl group, a neopentyl group, and a tert-pentyl group, which are branched alkyl groups. The alkyl group having 1 to 5 carbon atoms as Y is preferably an alkyl group having 1 to 4 carbon atoms, and more preferably an alkyl group having 1 to 3 carbon atoms.

Examples of a substituted alkyl group having 1 to 5 carbon atoms in the alkyl group having 1 to 5 carbon atoms substituted with at least one hydroxy group represented by Y in the formula (1) include: a methyl group, an ethyl group, an n-propyl group, an n-butyl group, and an n-pentyl group, which are linear alkyl groups; and an isopropyl group, an isobutyl group, a sec-butyl group, a tert-butyl group, an isopentyl group, a neopentyl group, and a tert-pentyl group, which are branched alkyl groups. The substituted alkyl group having 1 to 5 carbon atoms as Y is preferably an alkyl group having 1 to 4 carbon atoms, and more preferably an alkyl group having 1 to 3 carbon atoms. The number of substituents, i.e., the hydroxy group, is preferably one or two, and more preferably one.

Examples of the alkyl group having 1 to 5 carbon atoms substituted with at least one hydroxy group represented by Y in the formula (1) include a 2-hydroxyethyl group, a 2-hydroxypropyl group, and a 4-hydroxybutyl group.

Examples of a substituted alkyl group having 1 to 5 carbon atoms in the alkyl group having 1 to 5 carbon atoms substituted with at least one carboxy group represented by Y in the formula (1) include: a methyl group, an ethyl group, an n-propyl group, an n-butyl group, and an n-pentyl group, which are linear alkyl groups; and an isopropyl group, an isobutyl group, a sec-butyl group, a tert-butyl group, an isopentyl group, a neopentyl group, and a tert-pentyl group, which are branched alkyl groups. The substituted alkyl group having 1 to 5 carbon atoms as Y is preferably an alkyl group having 1 to 4 carbon atoms, and more preferably an alkyl group having 1 to 3 carbon atoms. The number of substituents, i.e., the carboxy group, is preferably one or two, and more preferably one.

Examples of the alkyl group having 1 to 5 carbon atoms substituted with at least one carboxy group represented by Y in the formula (1) include a 2-carboxyethyl group, a 2-carboxypropyl group, and a 4-carboxybutyl group.

In $-R-O-C(=O)-(CH_2)_n-C(=O)-OH$ represented by Y in the formula (1), R represents an alkylene group having 1 to 5 carbon atoms, and n represents an integer of 0 or more.

Examples of R include: a methylene group, an ethylene group, an n-propylene group, an n-butylene group, and an n-pentylene group, which are linear alkylene groups; and an isopropylene group, an isobutylene group, a sec-butylene group, a tert-butylene group, an isopentylene group, a neopentylene group, and a tert-pentylene group, which are branched alkylene groups. R is preferably an alkylene group having 1 to 4 carbon atoms, and more preferably an alkylene group having 1 to 3 carbon atoms.

n is preferably an integer of 0 to 5, more preferably an integer of 1 to 4, and still more preferably 2 or 3.

Specific examples of the group include $-(CH_2)_2-O-C(=O)-(CH_2)_2-C(=O)-OH$.

Examples of the monomer represented by the formula (1) include a monomer in which $R^1$, $R^2$, and $R^3$ are each independently a hydrogen atom or an alkyl group having 1 to 4 carbon atoms, X is a single bond, and Y is an alkyl group having 1 to 4 carbon atoms or an alkyl group having 1 to 3 carbon atoms substituted with at least one hydroxy group.

Examples of the monomer represented by the formula (1) include an acrylic monomer, an unsaturated dibasic acid, and a monoester of an unsaturated dibasic acid.

Examples of the acrylic monomer include (meth)acrylic acid, methyl (meth)acrylate, ethyl (meth)acrylate, isopropyl (meth)acrylate, n-butyl (meth)acrylate, isobutyl (meth)acrylate, tert-butyl (meth)acrylate, pentyl (meth)acrylate, 2-hydroxyethyl (meth)acrylate, 2-hydroxypropyl (meth)acrylate, 4-hydroxybutyl (meth)acrylate, 2-carboxyethyl (meth) acrylate, 2-carboxypropyl (meth)acrylate, 4-carboxybutyl (meth)acrylate, butenoic acid, pentenoic acid, hexenoic acid, and (meth)acryloyloxyethyl succinate. The expression "(meth)acryl" means either "acryl" or "methacryl".

Examples of the unsaturated dibasic acid include an unsaturated dicarboxylic acid, and specific examples thereof include maleic acid, maleic anhydride, citraconic acid, and itaconic acid.

Examples of the monoester of the unsaturated dibasic acid include monomethyl maleate, monoethyl maleate, monomethyl citraconate, monoethyl citraconate, monomethyl itaconate, monoethyl itaconate, and among these, monomethyl maleate and monomethyl citraconate are preferred.

In the polyvinylidene fluoride-based resin C, a proportion of the monomer represented by the formula (1) in all polymerization components is preferably 0.1 mol% or more, more preferably 0.2 mol% or more, and still more preferably 0.5 mol% or more, from the viewpoint of the adhesiveness to the electrode.

In the polyvinylidene fluoride-based resin C, the proportion of the monomer represented by the formula (1) in all polymerization components is preferably 5.0 mol% or less, more preferably 4.0 mol% or less, and still more preferably 3.0 mol% or less, from the viewpoint of a small influence on an active material contained in the electrode.

By increasing or decreasing the proportion of hexafluoropropylene (HFP) in all polymerization components in the polyvinylidene fluoride-based resin C, the crystallinity of the resin, the adhesiveness to the electrode, the dissolution resistance to the electrolyte solution, and the like can be controlled within appropriate ranges.

In the polyvinylidene fluoride-based resin C, the proportion of HFP in all polymerization components is preferably 0.5 mol% to 5.0 mol%, more preferably 0.8 mol% to 4.0 mol%, and still more preferably 1.0 mol% to 3.0 mol%.

The polyvinylidene fluoride-based resin C may contain a monomer other than vinylidene fluoride (VDF), hexafluoropropylene (HFP), and the monomer represented by the formula (1) as the polymerization components. Examples of the other monomers include halogen-containing monomers such as tetrafluoroethylene, trifluoroethylene, chlorotrifluoroethylene, vinyl fluoride, and trichloroethylene.

The polyvinylidene fluoride-based resin C is preferably a ternary copolymer composed of VDF, HFP, and the monomer represented by the formula (1). As the ternary copolymer, a VDF-HFP-acrylic acid ternary copolymer is preferred.

A weight-average molecular weight (Mw) of the polyvinylidene fluoride-based resin C is preferably 300,000 to 3,000,000, more preferably 500,000 to 2,500,000, still more preferably 650,000 to 2,300,000, and even more preferably 850,000 to 2,000,000.

When the adhesive layer contains the polyvinylidene fluoride-based resin C, the proportion of the polyvinylidene fluoride-based resin C in the entire polyvinylidene fluoride-based resin contained in the adhesive layer is preferably 20 mass% to 80 mass%, more preferably 30 mass% to 70 mass%, and still more preferably 40 mass% to 60 mass%, from the viewpoint of setting an acid value of the entire polyvinylidene fluoride-based resin in an appropriate range.

The weight-average molecular weight (Mw) of the entire polyvinylidene fluoride-based resin contained in the adhesive layer is preferably 300,000 or more, more preferably 500,000 or more, still more preferably 650,000 or more, and even more preferably 850,000 or more, from the viewpoint that clogging of the pores of the adhesive layer is less likely to occur when heat is applied to the adhesive layer in the production of the battery.

The Mw of the entire polyvinylidene fluoride-based resin contained in the adhesive layer is preferably 3,000,000 or less, more preferably 2,500,000 or less, still more preferably 2,300,000 or less, and even more preferably 2,000,000 or less from the viewpoint of appropriately softening the polyvinylidene fluoride-based resin when heat is applied to the adhesive layer in the production of the battery and favorably adhering the adhesive layer and the electrode.

The Mw of the entire polyvinylidene fluoride-based resin contained in the adhesive layer is a molecular weight in terms of polystyrene as measured using gel permeation chromatography (GPC). The polyvinylidene fluoride-based resin extracted from the adhesive layer or the polyvinylidene fluoride-based resin used for forming the adhesive layer is used as a sample.

The content of the polyvinylidene fluoride-based resin in the adhesive layer is preferably 85 mass% to 100 mass%, more preferably 90 mass% to 100 mass%, and still more preferably 95 mass% to 100 mass% with respect to a total mass of the adhesive layer.

-Other Resin-

The adhesive layer may contain a resin other than the polyvinylidene fluoride-based resin. Examples of the other resin include an acrylic resin, a butadiene-acrylonitrile-based resin, a fluorine-based rubber, a homopolymer or a copolymer of a vinyl nitrile compound (such as acrylonitrile or methacrylonitrile), a carboxymethyl cellulose, a hydroxyalkyl cellulose, a polyvinyl alcohol, a polyvinyl butyral, a polyvinyl pyrrolidone, a polyether (such as polyethylene oxide or polypropylene oxide), and a mixture of two or more kinds thereof. One kind of the resin may be used alone, or a combination

of two or more kinds thereof may be used.

A mass proportion of the other resin in all resins of the adhesive layer is preferably 10 mass% or less, more preferably 5 mass% or less, and still more preferably 1 mass% or less, and the other resin is particularly preferably not substantially contained.

The mass proportion of the polyvinylidene fluoride-based resin in all resins of the adhesive layer is preferably 90 mass% or more, more preferably 95 mass% or more, still more preferably 99 mass% or more, and particularly preferably 100 mass%.

-Other Components-

The adhesive layer may contain an additive, for example, a dispersant such as a surfactant, a wetting agent, an antifoaming agent, or a pH adjuster. The dispersant is added to, for example, a resin particle dispersion liquid for forming the adhesive layer for the purpose of improving the dispersibility, the coatability, or the storage stability. The wetting agent, the antifoaming agent, or the pH adjuster is added to a resin particle dispersion liquid for forming the adhesive layer, for example, for the purpose of improving the compatibility with the heat-resistant layer or the porous substrate, for the purpose of suppressing mixing of air into the resin particle dispersion liquid, or for the purpose of adjusting the pH.

-Properties of Adhesive Layer-

The adhesive layer has a porous structure in which fibrils containing a polyvinylidene fluoride-based resin are connected in a three-dimensional network shape. This porous structure can be checked using a scanning electron microscope (SEM).

A mass per unit area of the adhesive layer (in total of both surfaces) is preferably 0.5 $g/m^2$ or more, more preferably 0.8 $g/m^2$ or more, and still more preferably 1 $g/m^2$ or more, from the viewpoint of the adhesiveness to the electrode.

The mass per unit area of the adhesive layer (in total of both surfaces) is preferably 3 $g/m^2$ or less, more preferably 2.5 $g/m^2$ or less, and still more preferably 2 $g/m^2$ or less, from the viewpoint that the adhesive layer is thin and the battery has excellent cycle properties.

The mass per unit area of the adhesive layer is determined by cutting the separator into 20 cm $\times$ 20 cm, measuring a mass of a layer portion corresponding to the adhesive layer, dividing the mass by an area, and calculating the total of both surfaces.

[Properties of Separator]

A thickness of the separator is preferably 5 $\mu$m or more, more preferably 7 $\mu$m or more, and still more preferably 9 $\mu$m or more, from the viewpoint of the mechanical strength.

The thickness of the separator is preferably 15 $\mu$m or less, more preferably 12 $\mu$m or less, and still more preferably 10 $\mu$m or less, from the viewpoint of the energy density of the battery.

The thickness of the separator is determined by measuring thicknesses at 20 points in a 10-cm square using a contact-type thickness meter and taking an average thereof.

A Gurley value of the separator is preferably 60 s/100 mL or more, more preferably 70 s/100 mL or more, and still more preferably 80 s/100 mL or more, from the viewpoint of suppressing a short circuit of the battery.

The Gurley value of the separator is preferably 260 s/100 mL or less, more preferably 250 s/100 mL or less, and still more preferably 240 s/100 mL or less, from the viewpoint of the ion permeability.

A difference between the Gurley value of a laminate (laminate including the porous substrate and the heat-resistant layer disposed on one surface or both surfaces of the porous substrate) and the Gurley value of the separator is preferably 30 s/100 mL or less, more preferably 25 s/100 mL or less, and still more preferably 20 s/100 mL or less.

The Gurley value of the separator is determined by measurement using a Gurley densometer according to JIS P8117:2009.

The Gurley value of the laminate is a Gurley value of a flat film obtained by removing the adhesive layer from the separator. The Gurley value of the flat film is determined by measurement using a Gurley densometer according to JIS P8117:2009.

A porosity of the separator is preferably 30% to 60% from the viewpoint of the ion permeability.

A porosity of the laminate is preferably 30% to 60% from the viewpoint of the ion permeability.

The porosity $\varepsilon$ (%) of the separator (or the laminate) is determined according to the following equation.

[Math. 2]

$$\varepsilon = \left(1 - \frac{\sum_{i=1}^{n} \frac{Wi}{di}}{t}\right) \times 100$$

Here, regarding a constituent material 1, a constituent material 2, a constituent material 3, ..., and a constituent material n of the separator (or the laminate), the mass per unit area of each constituent material is $W_1$, $W_2$, $W_3$, ..., and $W_n$ ($g/cm^2$), the true density of each constituent material is $d_1$, $d_2$, $d_3$, ..., and $d_n$ ($g/cm^3$), and the thickness of the separator (or the laminate) is t (cm).

[Method for Producing Separator]

The separator according to the present disclosure is produced, for example, by a production method A or a production method B below. In the production method A and the production method B, a heat-resistant layer is formed on a porous substrate by using a dry coating method, and an adhesive layer is formed on the laminate by using a wet coating method. In the present disclosure, the dry coating method is a method of drying a coating layer to solidify the coating layer. In the present disclosure, the wet coating method is a method of solidifying a coating layer in a coagulation liquid.

Production method A (non-continuous production method): a heat-resistant layer is formed on a porous substrate unwound from a roll by using a dry coating method to obtain a laminate including the porous substrate and the heat-resistant layer, and then the laminate is once wound around another roll. Next, an adhesive layer is formed by using a wet coating method on the laminate unwound from the roll to obtain a separator, and the finished separator is wound around another roll.

Production method B (continuous production method): a heat-resistant layer is formed on a porous substrate unwound from a roll by using a dry coating method to obtain a laminate including the porous substrate and the heat-resistant layer, an adhesive layer is formed on the laminate by using a wet coating method to obtain a separator, and the finished separator is wound around another roll.

Hereinafter, steps included in the production method B will be described in detail. The production method B includes the following steps (1) to (7), and the steps (1) to (7) are sequentially performed.

Step (1): Preparation of Heat-resistant Layer Forming Coating Liquid

A heat-resistant layer forming coating liquid is prepared by dispersing, in a dispersion medium, a binder resin and inorganic particles for the heat-resistant layer. In the coating liquid, a component other than the binder resin and the inorganic particles is dissolved or dispersed as necessary.

The dispersion medium used for preparing the coating liquid is preferably water. A solid content concentration in the coating liquid may be set to a range in which an appropriate viscosity can be obtained from the viewpoint of coating suitability, and is preferably about 10 mass% to 60 mass%.

Step (2): Preparation of Adhesive Layer Forming Coating Liquid

An adhesive layer forming coating liquid is prepared by dissolving a polyvinylidene fluoride-based resin in a solvent. In the coating liquid, a component other than the polyvinylidene fluoride-based resin is dissolved or dispersed as necessary.

A solvent used for preparing the coating liquid includes a solvent that dissolves the polyvinylidene fluoride-based resin (hereinafter, also referred to as a "good solvent"). Examples of the good solvent include polar amide solvents such as N-methylpyrrolidone, dimethylacetamide, dimethylformamide, and dimethylformamide.

The solvent used for preparing the coating liquid preferably contains a phase separation agent that induces phase separation from the viewpoint of forming an adhesive layer having a favorable porous structure. Therefore, the solvent used for preparing the coating liquid is preferably a mixed solvent of a good solvent and a phase separation agent. The phase separation agent is preferably mixed with the good solvent in an amount within a range that the viscosity suitable for coating can be ensured. Examples of the phase separation agent include water, methanol, ethanol, propyl alcohol, butyl alcohol, butanediol, ethylene glycol, propylene glycol, and tripropylene glycol.

The solvent used for preparing the coating liquid is preferably a mixed solvent of a good solvent and a phase separation agent containing 60 mass% or more of the good solvent and 5 mass% to 40 mass% of the phase separation

agent from the viewpoint of forming a favorable porous structure.

A resin concentration in the coating liquid is preferably 1 mass% to 20 mass% from the viewpoint of forming a favorable porous structure.

Step (3): Coating Using Heat-resistant Layer Forming Coating Liquid

At least one surface of the porous substrate is coated with the heat-resistant layer forming coating liquid to form a coating layer on the porous substrate. Examples of a method for coating the porous substrate with the coating liquid include a knife coating method, a Meyer bar coating method, a die coating method, a reverse roll coating method, a roll coating method, a gravure coating method, a screen printing method, an inkjet method, and a spray method. When the heat-resistant layers are to be formed on both surfaces of the porous substrate, it is preferable to simultaneously coat both surfaces of the porous substrate with the coating liquid from the viewpoint of productivity.

Step (4): Solidification of Coating Layer

The porous substrate on which the coating layer to be a heat-resistant layer is formed is heated and the dispersion medium (for example, water) in the coating liquid is dried, to form the heat-resistant layer. The drying is performed, for example, by conveying the porous substrate on which the coating layer is formed into a high temperature environment, or applying wind to the porous substrate on which the coating layer is formed. A drying temperature is preferably 40°C to 100°C. Accordingly, a laminate including the porous substrate and the heat-resistant layer is obtained.

Step (5): Coating Using Adhesive Layer Forming Coating Liquid

At least one surface of the laminate is coated with the adhesive layer forming coating liquid. Examples of a method for coating the coating liquid include a knife coating method, a gravure coating method, a Meyer bar coating method, a die coating method, a reverse roll coating method, a roll coating method, a screen printing method, an inkjet method, and a spray method. When the adhesive layers are to be formed on both surfaces of the laminate, it is preferable to simultaneously coat both surfaces of the laminate with the coating liquid from the viewpoint of the productivity.

Step (6): Solidification of Coating Layer

The laminate on which the coating layer is formed is immersed in a coagulation liquid, and the polyvinylidene fluoride-based resin is solidified in a fibril state while inducing phase separation in the coating layer to form an adhesive layer containing the polyvinylidene fluoride-based resin. Accordingly, a separator including the porous substrate, the heat-resistant layer, and the adhesive layer is obtained.

The coagulation liquid generally contains the good solvent and the phase separation agent used for preparing the coating liquid, and water. A mixing ratio between the good solvent and the phase separation agent is preferably matched with a mixing ratio in the mixed solvent used for preparing the coating liquid in terms of production. A water content in the coagulation liquid is preferably 40 mass% to 90 mass% from the viewpoint of formation of the porous structure and the productivity. A temperature of the coagulation liquid is, for example, 20°C to 50°C.

Step (7): Water Washing and Drying of Coating Layer

The separator is withdrawn from the coagulation liquid and washed with water. By washing with water, the coagulation liquid is removed from the separator. Further, water is removed from the separator by drying. The washing with water is performed by, for example, conveying the separator into a washing bath. The drying is performed, for example, by conveying the separator into a high-temperature environment, applying wind to the separator, or bringing the separator into contact with a heat roll. A drying temperature is preferably 40°C to 80°C.

The production method A can be performed by performing the steps (1) to (4), winding the laminate once around a roll, unwinding the laminate from the roll, and performing the steps (5) to (7).

<Non-aqueous Secondary Battery>

The non-aqueous secondary battery according to the present disclosure is a non-aqueous secondary battery that obtains an electromotive force by doping and de-doping a lithium ion, and includes a positive electrode, a negative electrode, and the separator according to the present disclosure. The doping means occlusion, support, adsorption, or insertion and means a phenomenon that the lithium ion enters an active material of an electrode such as the positive electrode.

The non-aqueous secondary battery according to the present disclosure has a structure in which, for example, a battery element in which a negative electrode and a positive electrode face each other with a separator interposed therebetween is enclosed in an exterior material together with an electrolyte solution. The non-aqueous secondary battery according to the present disclosure is suitable for a non-aqueous electrolyte secondary battery, particularly for a lithium ion secondary battery.

The non-aqueous secondary battery according to the present disclosure has excellent impact resistance and cycle properties by including the separator according to the present disclosure.

Hereinafter, form examples of the positive electrode, the negative electrode, the electrolyte solution, and the exterior material included in the non-aqueous secondary battery according to the present disclosure will be described.

Embodiment examples of the positive electrode include a structure in which an active material layer containing a positive electrode active material and a binder resin is disposed on a current collector. The active material layer may further contain a conductive auxiliary agent. Examples of the positive electrode active material include a lithium-containing transition metal oxide, and specific examples thereof include $LiCoO_2$, $LiNiO_2$, $LiMn_{1/2}Ni_{1/2}O_2$, $LiCo_{1/3}Mn_{1/3}Ni_{1/3}O_2$, $LiMn_2O_4$, $LiFePO_4$, $LiCo_{1/2}Ni_{1/2}O_2$, and $LiAl_{1/4}Ni_{3/4}O_2$. Examples of the binder resin include a polyvinylidene fluoride-based resin and a styrene-butadiene copolymer. Examples of the conductive auxiliary agent include carbon materials such as acetylene black, Ketjen black, and a graphite powder. Examples of the current collector include an aluminum foil, a titanium foil, and a stainless steel foil, each having a thickness of 5 $\mu$m to 20 $\mu$m.

Embodiment examples of the negative electrode include a structure in which an active material layer containing a negative electrode active material and a binder resin is disposed on a current collector. The active material layer may further contain a conductive auxiliary agent. Examples of the negative electrode active material include materials capable of electrochemically occluding a lithium ion, and specific examples thereof include carbon materials, alloys of lithium with silicon, tin, aluminum, or the like, and a wood's alloy. Examples of the binder resin include a polyvinylidene fluoride-based resin and a styrene-butadiene copolymer. Examples of the conductive auxiliary agent include carbon materials such as acetylene black, Ketjen black, a graphite powder, and an ultrafine carbon fiber. Examples of the current collector include a copper foil, a nickel foil, and a stainless steel foil, each having a thickness of 5 $\mu$m to 20 $\mu$m. Instead of the negative electrode above, a metal lithium foil may be used as the negative electrode.

The electrolyte solution is preferably a solution obtained by dissolving a lithium salt in a non-aqueous solvent. Examples of the lithium salt include $LiPF_6$, $LiBF_4$, and $LiClO_4$. Examples of the non-aqueous solvent include: cyclic carbonates such as ethylene carbonate, propylene carbonate, fluoroethylene carbonate, difluoroethylene carbonate, and vinylene carbonate; chain carbonates such as dimethyl carbonate, diethyl carbonate, ethyl methyl carbonate, and a fluorine-substituted compound thereof; and cyclic esters such as $\gamma$-butyrolactone and $\gamma$-valerolactone, and these non-aqueous solvents may be used alone or as a mixture. The electrolyte solution is suitably a solution which is obtained by mixing a cyclic carbonate and a chain carbonate at a mass ratio (cyclic carbonate: chain carbonate) of 20:80 to 40:60 and dissolving a lithium salt therein in a range of 0.5 mol/L to 1.5 mol/L.

Examples of the exterior material include an aluminum laminated film pack and a metal can. A shape of the battery is a square shape, a cylindrical shape, a coin shape, or the like, and the separator according to the present disclosure is suitable for any shape.

The non-aqueous secondary battery according to the present disclosure can be produced, for example, by a production method 1 or a production method 2 below using a laminated product in which the separator according to the present disclosure is disposed between a positive electrode and a negative electrode after producing the laminated product.

Production method 1: electrodes and the separator are temporarily bonded by dry heat pressing a laminated product and then housed in an exterior material (for example, an aluminum laminated film pack; the same applies hereinafter), and an electrolyte solution is injected thereto. Next, the laminated product is wet heat pressed from over the exterior material to bond the electrodes and the separator and seal the exterior material.

Production method 2: a laminated product is housed in an exterior material, and an electrolyte solution is injected thereto. Next, the laminated product is wet heat pressed from over the exterior material to bond the electrodes and a separator and seal the exterior material.

In the production method 1 and the production method 2, a press temperature in the wet heat press is preferably 50°C to 95°C, and more preferably 60°C to 90°C. A press pressure in the wet heat press is preferably 0.1 MPa to 2 MPa, and more preferably 0.5 MPa to 1.5 MPa. A press time for the wet heat press is preferably adjusted according to the press temperature and the press pressure, and is adjusted, for example, in a range of 1 minute to 20 hours.

In the production of the laminated product in which the separator is disposed between the positive electrode and the negative electrode, a method of disposing the separator between the positive electrode and the negative electrode may be a method of laminating one by one at least one layer of the positive electrode, the separator, and the negative electrode in this order (a so-called stack method) or may be a method of laminating the positive electrode, the separator, the negative electrode, and the separator in this order and winding them in a length direction.

Examples

Hereinafter, the separator and the non-aqueous secondary battery according to the present disclosure will be further specifically described with reference to Examples. The materials, the used amounts, the proportions, the treatment procedures, and the like described in the following Examples can be changed, if appropriate, without departing from the gist of the present disclosure. Therefore, the ranges of the separator and the non-aqueous secondary battery according to the present disclosure should not be interpreted by the following specific examples in a limited manner.
In the following description, synthesis, treatment, production, and the like were performed at room temperature (25°C ± 3°C) unless otherwise specified.

<Measurement Methods and Evaluation Methods>

The measurement methods and the evaluation methods applied in Examples and Comparative Examples are as follows.

[Thicknesses of Porous Substrate and Separator]

The thicknesses of the porous substrate and the separator were determined by measuring thicknesses at 20 points in a 10-cm square using a contact-type thickness meter (LITEMATIC VL-50S, manufactured by Mitutoyo Corporation) and taking an average thereof. A spherical probe (Mitutoyo Corporation) having a sphere radius of 10 mm was used for a measuring terminal and was adjusted such that a load of 0.19 N was applied during the measurement.

[Thickness of Heat-resistant Layer]

The thickness was determined by subtracting the thickness of the porous substrate from a thickness of a flat film obtained by removing the adhesive layer from the separator. The thickness of the flat film was determined by measuring thicknesses at 20 points in a 10-cm square using a contact-type thickness meter (LITEMATIC VL-50S, manufactured by Mitutoyo Corporation) and taking an average thereof. A spherical probe (Mitutoyo Corporation) having a sphere radius of 10 mm was used for a measuring terminal and was adjusted such that a load of 0.19 N was applied during the measurement.

[Mass per Unit Area of Adhesive Layer]

A basis weight (g/m$^2$) in total of both surfaces was determined by cutting the separator into 20 cm × 20 cm, measuring a mass of a layer portion corresponding to the adhesive layer, and dividing the mass by an area.

[Gurley Values of Porous Substrate, Laminate, and Separator]

The Gurley value (s/100 mL) of each of the porous substrate, the laminate, and the separator was measured using a Gurley densometer (G-B2C manufactured by Toyo Seiki Seisaku-sho, Ltd.) according to JIS P8117:2009.
The Gurley value of the laminate was subtracted from the Gurley value of the separator to determine the difference in Gurley value.

[Average Primary Particle Diameter of Inorganic Particles]

The inorganic particles for forming the heat-resistant layer were used as a sample, which was observed using a scanning electron microscope (SEM) to determine the average primary particle diameter. Specifically, major diameters of 100 inorganic particles randomly selected in observation using a SEM were measured, and the average value of the major diameters of the 100 inorganic particles was defined as the average primary particle diameter (μm).

[Thermal Shrinkage Rate]

The separator was cut out into a rectangle of 60 mm in TD × 180 mm in MD to prepare a test piece. The test piece was imparted with marks at positions 20 mm and 170 mm from one end on a line bisecting the TD (referred to as a point A and a point B, respectively). Further, the test piece was imparted with marks at positions 10 mm and 50 mm from one end on a line bisecting the test piece in the MD (referred to as a point C and a point D, respectively). A clip was attached to the test piece (the place where the clip was attached was between the end closest to the point A and the point A), the test piece was hanged in an oven at a temperature of 150°C, and a heat treatment was performed for 30 minutes under no tension. A

length between A and B and a length between C and D were measured before and after the heat treatment, a thermal shrinkage rate was calculated according to the following equation, and further, the thermal shrinkage rates of three test pieces were averaged.

MD thermal shrinkage rate (%) = {(length between A and B before heat treatment - length between A and B after heat treatment)/length between A and B before heat treatment} $\times$ 100

TD thermal shrinkage rate (%) = {(length between C and D before heat treatment - length between C and D after heat treatment)/length between C and D before heat treatment} $\times$ 100

[Adhesiveness (1) to Electrode]

Using a double-armed mixer, 300 g of artificial graphite as a negative electrode active material, 7.5 g of a water-soluble dispersion liquid containing 40 mass% of a modified product of a styrene-butadiene copolymer as a binder, 3 g of carboxymethyl cellulose as a thickener, and an appropriate amount of water were stirred and mixed to prepare a negative electrode slurry. The negative electrode slurry was applied to one surface of a copper foil having a thickness of 10 μm, dried and then pressed to obtain a negative electrode having a negative electrode active material layer.

The negative electrode obtained above was cut into a rectangle of 15 mm in width $\times$ 70 mm in length, and the separator was cut into a rectangle of 18 mm in TD $\times$ 74 mm in MD. Release paper of 15 mm in width $\times$ 70 mm in length was prepared. A laminate in which the negative electrode, the separator, and the release paper were laminated in this order was inserted into an aluminum laminated film pack, and hot press was performed in a lamination direction of the laminate together with the pack using a hot press machine, thereby bonding the negative electrode to the separator. The conditions in the hot press were a temperature of 90°C, a pressure of 9 MPa, and a time of 10 seconds. Thereafter, the laminate was taken out from the pack, the release paper was peeled off, and this was used as a test piece.

The non-coating surface of the negative electrode of the test piece was fixed to a metal plate using a double-sided tape, and the metal plate was fixed to a lower chuck of TENSILON (STB-1225S, manufactured by A&D Company, Limited). At this time, the metal plate was fixed to the TENSILON such that the length direction of the test piece (that is, MD of the separator) was the direction of gravity. The separator was peeled off from the negative electrode by about 2 cm from a lower end, the end was fixed to an upper chuck, and a 180° peel test was performed. A tensile speed in the 180° peel test was set to 20 mm/min. A load (N) from 10 mm to 40 mm after the start of the measurement was sampled at an interval of 0.4 mm, and an average thereof was calculated. Further, the load of 10 test pieces was averaged to obtain adhesive strength (N/15 mm) between the electrode and the separator.

[Adhesiveness (2) to Electrode]

A test secondary battery to be described later was prepared. The battery was subjected to a compression bending test (three-point bending measurement). The measurement was performed by attaching a compression bending test jig to TENSILON (STB-1225S, manufactured by A&D Company, Limited). A distance to a support stage was set to 4 cm, and the battery was placed on the support stage such that a short side direction of the battery was parallel to a long side direction of an indenter and such that a compression position during the measurement was at the center in the long side direction of the electrodes in the battery. A displacement obtained when the indenter was lowered until a load of 0.1 N was applied was set to 0, and the measurement was started. A compression rate during the measurement was set to 2 mm/min, and the measurement was performed up to a displacement of 2 mm. A modulus gradient (unit: N/mm) in a load displacement curve obtained from this result was defined as the adhesive strength.

[Cycle Properties (Capacity Retention Rate) of Battery]

Ten test secondary batteries to be described later were prepared. Under an environment of a temperature of 20°C, constant-current and constant-voltage charging at 0.1 C and 4.2 V for 15 hours and constant-current discharging at 0.1 C and 2.5 V cut-off were performed on the battery for three cycles, and a discharge capacity after the three cycles was taken as a cell capacity. Next, under an environment of a temperature of 20°C, constant-current charging at 3 C and 4.2 V cutoff and constant-current discharging at 3 C and 2.5 V cutoff were performed on the battery for 300 cycles. A charge capacity at the 300th cycle was divided by the cell capacity to calculate the average of the ten batteries, and the obtained value (%) was taken as a capacity retention rate.

[Impact Resistance (Compression Breaking Strength) of Battery]

Ten test secondary batteries to be described later were prepared. Under an environment of a temperature of 20°C, constant-current and constant-voltage charging was performed on the test secondary battery. Specifically, the battery was charged to 4.2 V at 0.1 C and held at 4.2 V for 3 hours. Next, the test secondary battery was placed on a horizontal stand with the positive electrode side facing upward, and fixed to the horizontal stand using an adhesive tape. A spherical terminal having a diameter of 5 mm was placed in a central portion on the test secondary battery, and gradually lowered at a speed of 100 mm/min to apply a load to the test secondary battery. The value (unit: N) of the load at the moment when the voltage of the test secondary battery decreased and reached 3.5 V was determined, and the average of the ten batteries was calculated.

<Preparation of Separator and Battery>

[Example 1]

-Preparation of Separator-

To water, a styrene-butadiene rubber (SBR) and barium sulfate particles (average primary particle diameter: 0.10 μm) were added and stirred to obtain a coating liquid (1). The coating liquid (1) had an SBR concentration of 3.5 mass% and a mass ratio of barium sulfate particles to SBR of 97:3.

As the polyvinylidene fluoride-based resin A, a binary copolymer (weight-average molecular weight: 1,130,000) having a polymerization ratio (molar ratio) of VDF:HFP = 97.6:2.4 was prepared.

As the polyvinylidene fluoride-based resin B, a binary copolymer (weight average-molecular weight: 860,000) having a polymerization ratio (molar ratio) of VDF:HFP = 94.3:5.7 was prepared.

The polyvinylidene fluoride-based resin A and the polyvinylidene fluoride-based resin B were mixed at a mass ratio A:B = 70:30.

A mixed solvent of dimethylacetamide (DMAc) and tripropylene glycol (TPG) (DMAc:TPG = 70:30 [mass ratio]) was prepared. A polyvinylidene fluoride-based resin (a mixture of the polyvinylidene fluoride-based resin A and the polyvinylidene fluoride-based resin B) was dissolved in the mixed solvent at a concentration of 5.0 mass% to obtain a coating liquid (2).

An appropriate amount of the coating liquid (1) was placed on a pair of Meyer bars, and a polyethylene microporous film (thickness: 5.6 μm, Gurley value 120 s/100 mL) was passed through between the Meyer bars, to be coated with an equal amount of the coating liquid (1) on both surfaces, followed by drying. Next, an appropriate amount of the coating liquid (2) was placed on a pair of Meyer bars, the polyethylene microporous film having the coating layer of the coating liquid (1) was passed through between the Meyer bars to be coated with an equal amount of the coating liquid (2) on both surfaces, the coating layer was immersed in a coagulation liquid (DMAc:TPG:water = 30:8:62 [mass ratio], liquid temperature: 40°C) to be solidified, and the solidified coating layer was washed in a water washing tank having a water temperature of 40°C, followed by drying.

In this way, a separator in which the heat-resistant layer and the adhesive layer were formed on both surfaces of the polyethylene microporous film was obtained.

When the surface of the separator was observed using a SEM, the adhesive layer had a porous structure in which fibrils were connected in a three-dimensional network shape. FIG. 6 shows a scanning electron microscope (SEM) image of the adhesive layer included in the separator in Example 1.

-Preparation of Positive Electrode-

Using a double-armed mixer, 89.5 parts by mass of a lithium cobalt oxide powder as a positive electrode active material, 4.5 parts by mass of acetylene black as a conductive auxiliary agent, 6 parts by mass of polyvinylidene fluoride as a binder resin, and an appropriate amount of N-methyl-2-pyrrolidone were stirred and mixed to prepare a positive electrode slurry. The positive electrode slurry was applied to both surfaces or one surface of an aluminum foil having a thickness of 20 μm, dried and then pressed to obtain a positive electrode having a positive electrode active material layer on both surfaces or one surface.

-Preparation of Negative Electrode-

Using a double-armed mixer, 300 parts by mass of artificial graphite as a negative electrode active material, 7.5 parts by mass of a water-soluble dispersion liquid containing 40 mass% of a modified product of a styrene-butadiene copolymer as a binder resin, 3 parts by mass of carboxymethyl cellulose as a thickener, and an appropriate amount of

water were stirred and mixed to prepare a negative electrode slurry. The negative electrode slurry was applied to both surfaces or one surface of a copper foil having a thickness of 10 μm, dried and then pressed to obtain a negative electrode having a negative electrode active material layer on both surfaces or one surface.

-Preparation of Battery for Evaluation of Adhesiveness to Electrode-

The double-sided positive electrode and the double-sided negative electrode were cut into rectangles of 30 mm × 70 mm.

The separator was cut into a rectangle of 35 mm in TD × 75 mm in MD.

The positive electrodes and the negative electrodes were alternately laminated such that the separator was sandwiched between the positive electrode and the negative electrode, to prepare a laminated product composed of three positive electrodes, three negative electrodes, and five separators. The laminated product was inserted into an aluminum laminated film pack, an electrolyte solution (1 mol/L $LiPF_6$-ethylene carbonate: ethyl methyl carbonate [mass ratio: 3:7]) was injected into the pack, and the laminated product was impregnated with the electrolyte solution. Next, the laminated product together with the pack was subjected to hot press using a hot press machine in a lamination direction (wet heat press), thereby bonding the electrodes to the separator. The conditions in the hot press were a press temperature of 85°C, a press pressure of 1 MPa, and a press time of 2 minutes. The test secondary battery thus obtained was subjected to the evaluation of adhesiveness (2) to an electrode.

-Preparation of Battery for Evaluation of Cycle Properties and Impact Resistance-

The single-sided positive electrode and the single-sided negative electrode were cut into rectangles of 14 mm × 20 mm.

The separator was cut into a rectangle of 20 mm in TD × 26 mm in MD.

Lamination was performed such that the positive electrode active material layer and the negative electrode active material layer faced each other and such that the separator was sandwiched between the positive electrode and the negative electrode, to prepare a laminated product composed of one positive electrode, one negative electrode, and one separator. The laminated product was inserted into an aluminum laminated film pack, an electrolyte solution (1 mol/L $LiPF_6$-ethylene carbonate: ethyl methyl carbonate [mass ratio: 3:7]) was injected into the pack, and the laminated product was impregnated with the electrolyte solution. Next, the laminated product together with the pack was subjected to hot press using a hot press machine in a lamination direction (wet heat press), thereby bonding the electrodes to the separator. The conditions in the hot press were a press temperature of 80°C, a press pressure of 1 MPa, and a press time of 2 minutes. The test secondary battery thus obtained was subjected to evaluation of cycle properties and impact resistance of the battery.

[Example 2]

A separator was prepared in the same manner as in Example 1 except that barium sulfate particles (average primary particle diameter: 0.10 μm) were changed to γ-alumina (average primary particle diameter: 0.01 μm). A test secondary battery was prepared using this separator.

[Example 3]

A separator was prepared in the same manner as in Example 1 except that barium sulfate particles (average primary particle diameter: 0.10 μm) were changed to boehmite (average primary particle diameter: 0.10 μm). A test secondary battery was prepared using this separator.

[Example 4]

A separator was prepared in the same manner as in Example 1 except that barium sulfate particles (average primary particle diameter: 0.10 μm) were changed to boehmite (average primary particle diameter: 0.10 μm) and the coating surface of the heat-resistant layer was changed to one surface of the polyethylene microporous film. A test secondary battery was prepared using this separator.

[Example 5]

A separator was prepared in the same manner as in Example 1 except that barium sulfate particles (average primary particle diameter: 0.10 μm) were changed to boehmite (average primary particle diameter: 0.10 μm) and the

coating amount of the adhesive layer was changed. A test secondary battery was prepared using this separator.

[Example 6]

A separator was prepared in the same manner as in Example 1 except that barium sulfate particles (average primary particle diameter: 0.10 μm) were changed to boehmite (average primary particle diameter: 0.10 μm) and the coating amount of the adhesive layer was changed. A test secondary battery was prepared using this separator.

[Example 7]

A separator was prepared in the same manner as in Example 1 except that SBR was changed to poly(n-butyl acrylate) and barium sulfate particles (average primary particle diameter: 0.10 μm) were changed to boehmite (average primary particle diameter: 0.10 μm). A test secondary battery was prepared using this separator.

[Example 8]

A separator was prepared in the same manner as in Example 1 except that the average primary particle diameter of the barium sulfate particles was changed from 0.10 μm to 0.30 μm. A test secondary battery was prepared using this separator.

[Example 9]

A separator was prepared in the same manner as in Example 1 except that the composition of the coating liquid (1) was changed to barium sulfate particles: SBR = 95:5 [mass ratio]. A test secondary battery was prepared using this separator.

[Comparative Example 1]

A separator was prepared in the same manner as in Example 1 except that the composition of the coating liquid (1) was changed to barium sulfate particles: SBR = 80:20 [mass ratio]. A test secondary battery was prepared using this separator.

[Comparative Example 2]

A separator was prepared in the same manner as in Example 1 except that barium sulfate particles (average primary particle diameter: 0.10 μm) were changed to boehmite (average primary particle diameter: 2.3 μm), the coating surface of the heat-resistant layer was changed to one surface of the polyethylene microporous film, and the thickness of the heat-resistant layer was changed. A test secondary battery was prepared using this separator.

[Comparative Example 3]

A separator was prepared in the same manner as in Example 1 except that the coating liquid (2) was changed to a PVDF particle dispersion liquid (volume average particle diameter of particles: 0.2 μm, dispersion medium: water, solid content concentration: 7 mass%), and the heat-resistant layer was dry-coated with the PVDF particle dispersion liquid. A test secondary battery was prepared using this separator.
When the surface of the separator in Comparative Example 3 was observed using a SEM, the adhesive layer had a structure in which resin particles were arranged adjacent to each other in a plane direction.
The separator in Comparative Example 3 was not evaluated for the adhesiveness (1) to the electrode. This is because the hot press (dry heat press) without an electrolyte solution was not bonded to a test negative electrode.
The abbreviations in Table 1 are as follows.

- PE: polyethylene
- SBR: styrene-butadiene rubber
- PVDF: polyvinylidene fluoride

[Table 1]

| | Porous substrate | | Heat-resistant layer | | | | | | Adhesive layer | | | |
|---|---|---|---|---|---|---|---|---|---|---|---|---|
| | Material | Thickness | Binder resin | Inorganic particles | | | Thickness (per layer) | Coating surface | Material | Structure | Mass (in total of both surfaces) | Coating surface |
| | | | Kind | Kind | Average primary particle diameter | Content | | | | | | |
| | - | μm | - | - | μm | mass% | μm | - | - | - | $g/m^2$ | - |
| Ex. 1 | PE | 5.6 | SBR | Barium sulfate | 0.10 | 97 | 1 | Both surfaces | PVDF-based resin | Three-dimensional network shape | 1.0 | Both surfaces |
| Ex. 2 | PE | 5.6 | SBR | γ-alumina | 0.01 | 97 | 1 | Both surfaces | PVDF-based resin | Three-dimensional network shape | 1.0 | Both surfaces |
| Ex. 3 | PE | 5.6 | SBR | Boehmite | 0.10 | 97 | 1 | Both surfaces | PVDF-based resin | Three-dimensional network shape | 1.0 | Both surfaces |
| Ex. 4 | PE | 5.6 | SBR | Boehmite | 0.10 | 97 | 1 | One surface | PVDF-based resin | Three-dimensional network shape | 1.0 | Both surfaces |
| Ex. 5 | PE | 5.6 | SBR | Boehmite | 0.10 | 97 | 1 | Both surfaces | PVDF-based resin | Three-dimensional network shape | 0.3 | Both surfaces |
| Ex. 6 | PE | 5.6 | SBR | Boehmite | 0.10 | 97 | 1 | Both surfaces | PVDF-based resin | Three-dimensional network shape | 3.3 | Both surfaces |

*Ex.: Example, Comp. Ex.: Comparative Example

[Table 1] (continued)

| | Separator | | | | | | Battery | |
|---|---|---|---|---|---|---|---|---|
| | Difference in Gurley value | Thermal shrinkage rate | | Adhesiveness (1) to electrode | | Adhesiveness (2) to electrode | Cycle properties | Impact resistance |
| | | MD | TD | Negative electrode | Positive electrode | | | |
| | s/100 mL | % | % | N/15 mm | | N/mm | % | N |
| Ex. 1 | 48 | 1 | 1 | 0.09 | 0.08 | 15.7 | 61 | 585 |
| Ex. 2 | 61 | 1 | 1 | 0.08 | 0.09 | 17.5 | 57 | 603 |
| Ex. 3 | 50 | 2 | 1 | 0.09 | 0.09 | 16.6 | 59 | 548 |
| Ex. 4 | 20 | 51 | 54 | 0.10 | 0.09 | 11.0 | 63 | 478 |
| Ex. 5 | 48 | 2 | 1 | 0.04 | 0.04 | 9.0 | 60 | 540 |
| Ex. 6 | 51 | 1 | 1 | 0.07 | 0.07 | 16.7 | 41 | 550 |
| *Ex.: Example, Comp. Ex.: Comparative Example | | | | | | | | |

[Table 1] (continued)

| | Porous substrate | | Heat-resistant layer | | | | | | Adhesive layer | | | |
|---|---|---|---|---|---|---|---|---|---|---|---|---|
| | Material | Thickness | Binder resin | Inorganic particles | | | Thickness (per layer) | Coating surface | Material | Structure | Mass (in total of both surfaces) | Coating surface |
| | | | Kind | Kind | Average primary particle diameter | Content | | | | | | |
| | - | μm | - | - | μm | mass% | μm | - | - | - | g/m$^2$ | - |
| Ex. 7 | PE | 5.6 | Butyl acrylate resin | Boehmite | 0.10 | 97 | 1 | Both surfaces | PVDF-based | Three-dimensional network shape | 1.0 | Both surfaces |
| Ex. 8 | PE | 5.6 | SBR | Barium sulfate | 0.30 | 97 | 1 | Both surfaces | PVDF-based | Three-dimensional network shape | 1.0 | Both surfaces |
| Ex. 9 | PE | 5.6 | SBR | Barium sulfate | 0.10 | 95 | 1 | Both surfaces | PVDF-based | Three-dimensional network shape | 1.0 | Both surfaces |
| Comp . Ex. 1 | PE | 5.6 | SBR | Barium sulfate | 0.10 | 80 | 1 | Both surfaces | PVDF-based | Three-dimensional network shape | 1.0 | Both surfaces |
| Comp . Ex. 2 | PE | 5.6 | SBR | Boehmite | 2.3 | 97 | 3 | One surface | PVDF-based resin | Three-dimensional network shape | 1.0 | Both surfaces |
| Comp . Ex. 3 | PE | 5.6 | SBR | Boehmite | 0.10 | 97 | 1 | Both surfaces | PVDF resin particles | Structure in which particles are arranged in plane direction | 0.9 | Both surfaces |

*Ex.: Example, Comp. Ex.: Comparative Example

[Table 1] (continued)

| | Separator | | | | | | Battery | |
|---|---|---|---|---|---|---|---|---|
| | Difference in Gurley value | Thermal shrinkage rate | | Adhesiveness (1) to electrode | | Adhesiveness (2) to electrode | Cycle properties | Impact resistance |
| | | MD | TD | Negative electrode | Positive electrode | | | |
| | s/100 mL | % | % | N/15 mm | | N/mm | % | N |
| Ex. 7 | 49 | 2 | 1 | 0.09 | 0.10 | 16.5 | 60 | 584 |
| Ex. 8 | 45 | 10 | 13 | 0.09 | 0.08 | 14.9 | 63 | 490 |
| Ex. 9 | 55 | 3 | 4 | 0.09 | 0.09 | 15.1 | 60 | 530 |
| Comp . Ex. 1 | 150 | 30 | 45 | 0.09 | 0.09 | 14.8 | 10 | 430 |
| Comp . Ex. 2 | 49 | 60 | 65 | 0.08 | 0.08 | 13.2 | 50 | 450 |
| Comp . Ex. 3 | 24 | 1 | 1 | - | | 8.1 | 25 | 555 |
| *Ex.: Example, Comp. Ex.: Comparative Example | | | | | | | | |

All the documents, patent applications, and technical standards described in this description are incorporated in this description by reference to the same extent as if each of the documents, the patent applications, and the technical standards were specifically and individually indicated to be incorporated herein by reference.

The disclosure of Japanese Patent Application No. 2023-188885 filed on November 2, 2023 is all incorporated herein by reference.

Reference Signs List

10A, 10B, 10C, 10D, 10E: separator
20: porous substrate
30: heat-resistant layer
40: laminate
50: adhesive layer

## Claims

1. A separator for a non-aqueous secondary battery comprising:

   a porous substrate;
   a heat-resistant layer disposed on one surface or both surfaces of the porous substrate and containing inorganic particles and a binder resin; and
   an adhesive layer disposed on one surface or both surfaces of a laminate including the porous substrate and the heat-resistant layer and containing a polyvinylidene fluoride-based resin, wherein
   the inorganic particles have a mass proportion of 95 mass% or more in the heat-resistant layer,
   the inorganic particles contained in the heat-resistant layer have an average primary particle diameter of 0.01 μm to 0.30 μm, and
   the adhesive layer has a porous structure in which fibrils containing the polyvinylidene fluoride-based resin are connected in a three-dimensional network shape.

2. The separator for a non-aqueous secondary battery according to claim 1, wherein the heat-resistant layer is disposed on both surfaces of the porous substrate.

**3.** The separator for a non-aqueous secondary battery according to claim 1, wherein the inorganic particles include at least one selected from the group consisting of metal oxide particles, metal hydroxide particles, and metal sulfate particles.

**4.** The separator for a non-aqueous secondary battery according to claim 1, wherein the inorganic particles include barium sulfate particles.

**5.** The separator for a non-aqueous secondary battery according to claim 1, wherein

the polyvinylidene fluoride-based resin includes the following polyvinylidene fluoride-based resin A and polyvinylidene fluoride-based resin B,
polyvinylidene fluoride-based resin A: a polyvinylidene fluoride-based resin containing vinylidene fluoride and hexafluoropropylene as polymerization components and having a proportion of hexafluoropropylene of more than 1.5 mol% and 5 mol% or less in a total of vinylidene fluoride and hexafluoropropylene,
polyvinylidene fluoride-based resin B: a polyvinylidene fluoride-based resin containing vinylidene fluoride and hexafluoropropylene as polymerization components and having a proportion of hexafluoropropylene of more than 5 mol% and 15 mol% or less in a total of vinylidene fluoride and hexafluoropropylene.

**6.** The separator for a non-aqueous secondary battery according to claim 1, wherein

the polyvinylidene fluoride-based resin includes the following polyvinylidene fluoride-based resin C,
polyvinylidene fluoride-based resin C: a polyvinylidene fluoride-based resin containing, as polymerization components, vinylidene fluoride, hexafluoropropylene, and a monomer represented by the following formula (1):

[Chem. 1]

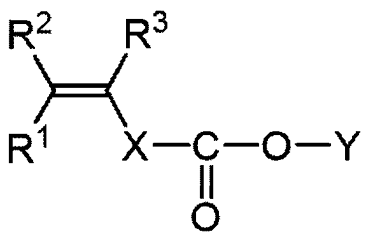

(1)

wherein $R^1$, $R^2$, and $R^3$ each independently represent a hydrogen atom, a halogen atom, an alkyl group having 1 to 5 carbon atoms, a carboxy group, or a derivative of a carboxy group, X represents a single bond, an alkylene group having 1 to 5 carbon atoms, or an alkylene group having 1 to 5 carbon atoms and having a substituent, and Y represents a hydrogen atom, an alkyl group having 1 to 5 carbon atoms, an alkyl group having 1 to 5 carbon atoms substituted with at least one hydroxy group, an alkyl group having 1 to 5 carbon atoms substituted with at least one carboxy group, or $-R-O-C(=O)-(CH_2)_n-C(=O)-OH$, wherein R represents an alkylene group having 1 to 5 carbon atoms, and n represents an integer of 0 or more.

**7.** The separator for a non-aqueous secondary battery according to claim 1, wherein the binder resin in the heat-resistant layer contains at least one selected from the group consisting of a butadiene-based polymer and an acrylic resin.

**8.** The separator for a non-aqueous secondary battery according to claim 1, wherein the heat-resistant layer has a thickness of 0.1 μm to 2 μm per layer.

**9.** The separator for a non-aqueous secondary battery according to claim 1, wherein the porous substrate has a thickness of 1 μm to 7 μm.

**10.** The separator for a non-aqueous secondary battery according to claim 1, wherein the adhesive layer has a mass per unit area of 0.5 $g/m^2$ to 3 $g/m^2$ in total of both surfaces.

**11.** The separator for a non-aqueous secondary battery according to claim 1, wherein a difference between a Gurley value of the laminate and a Gurley value of the separator for a non-aqueous secondary battery is 30 s/100 mL or less.

**12.** A non-aqueous secondary battery that obtains an electromotive force by doping and de-doping a lithium ion, the non-aqueous secondary battery comprising:

a positive electrode;
a negative electrode; and
the separator for a non-aqueous secondary battery according to any one of claims 1 to 11 disposed between the positive electrode and the negative electrode.

FIG.1

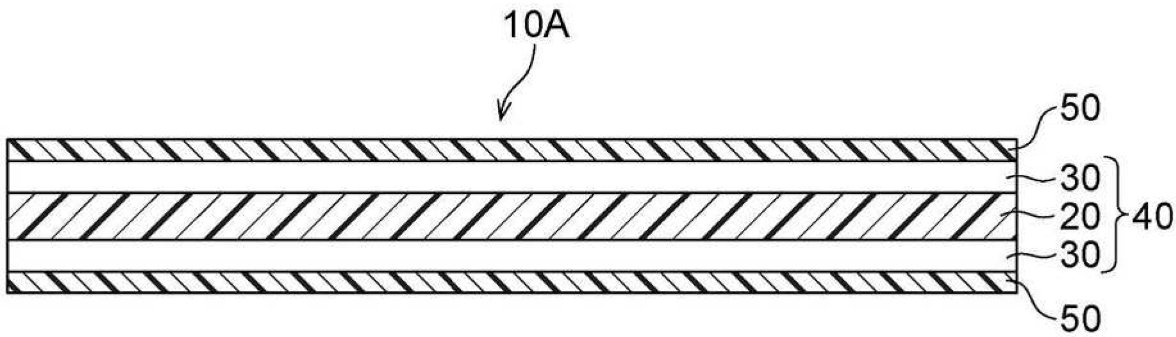


FIG.2

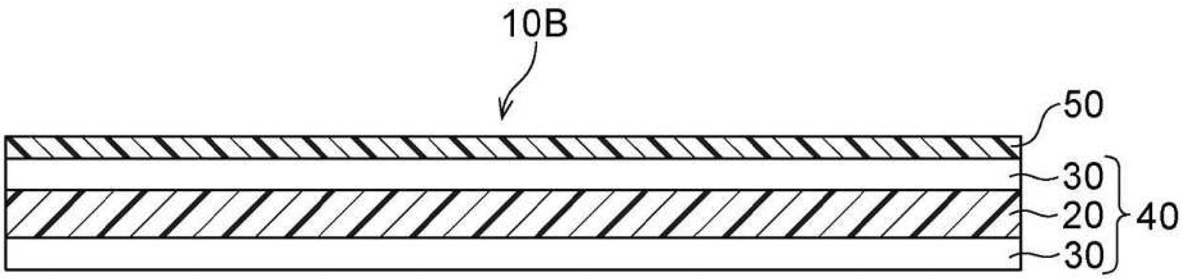


FIG.3

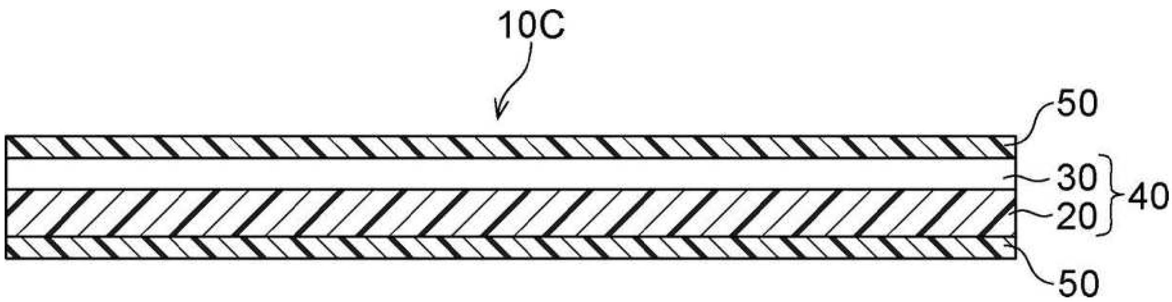

FIG.4

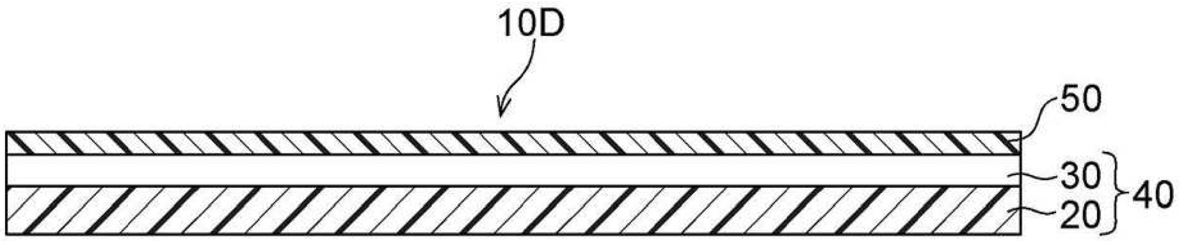


FIG.5

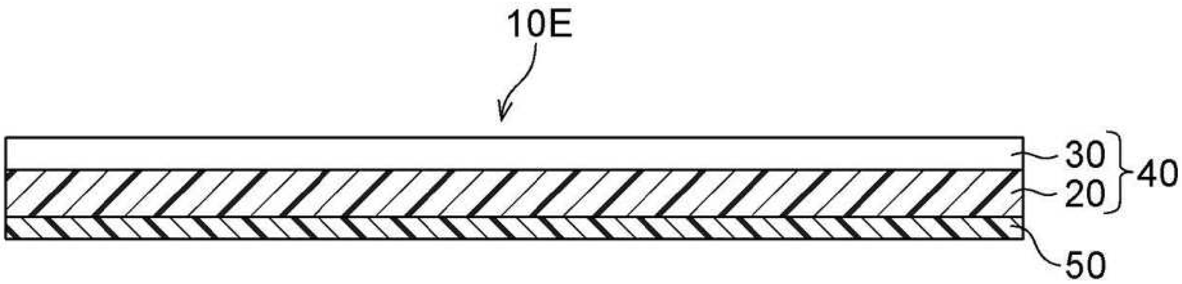

FIG.6

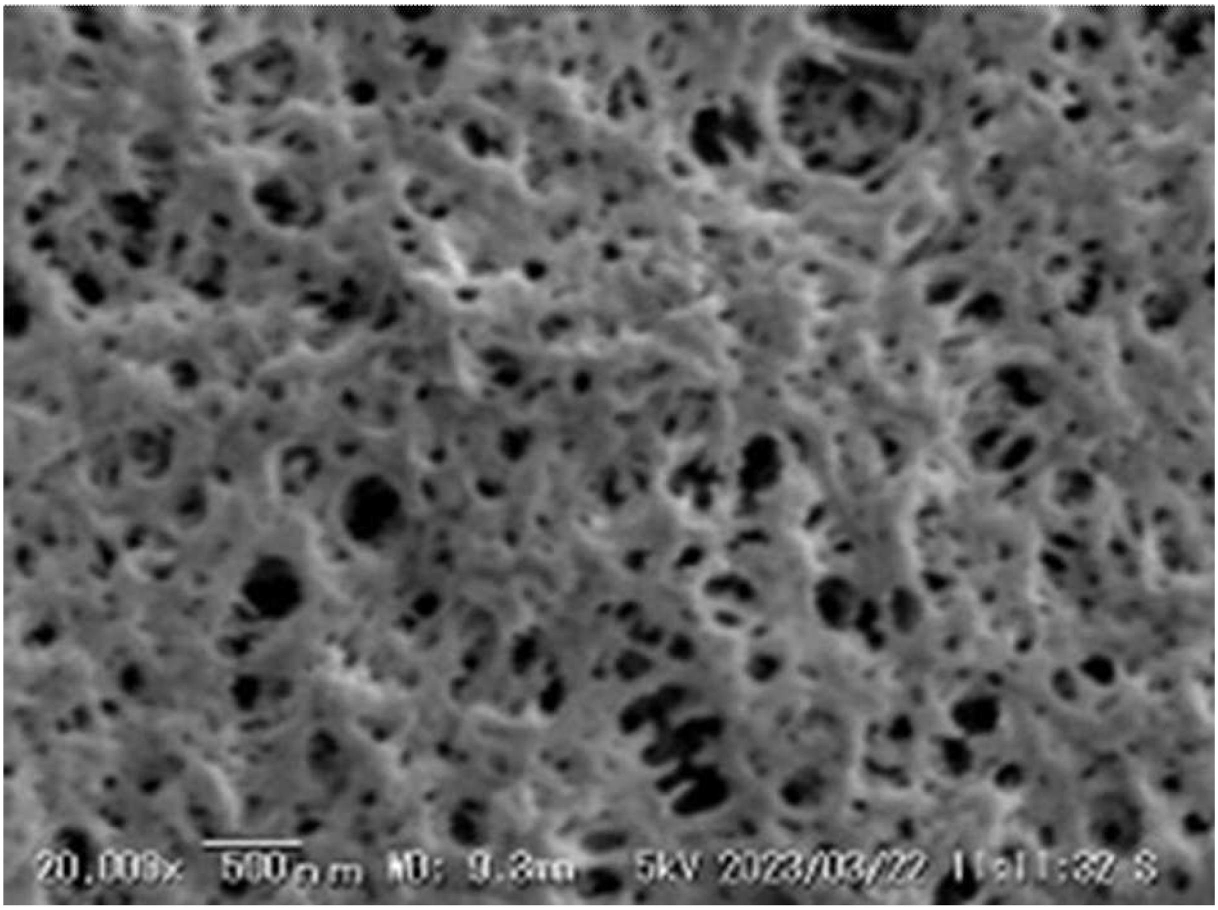

**INTERNATIONAL SEARCH REPORT**

International application No.
**PCT/JP2024/039135**

**A. CLASSIFICATION OF SUBJECT MATTER**

***H01M 50/457***(2021.01)i; ***H01M 50/414***(2021.01)i; ***H01M 50/42***(2021.01)i; ***H01M 50/426***(2021.01)i; ***H01M 50/434***(2021.01)i; ***H01M 50/443***(2021.01)i; ***H01M 50/446***(2021.01)i; ***H01M 50/451***(2021.01)i; ***H01M 50/489***(2021.01)i; ***H01M 50/491***(2021.01)i

FI: H01M50/457; H01M50/451; H01M50/443 M; H01M50/446; H01M50/426; H01M50/434; H01M50/489; H01M50/491; H01M50/42; H01M50/414

According to International Patent Classification (IPC) or to both national classification and IPC

**B. FIELDS SEARCHED**

Minimum documentation searched (classification system followed by classification symbols)

H01M50/457; H01M50/414; H01M50/42; H01M50/426; H01M50/434; H01M50/443; H01M50/446; H01M50/451; H01M50/489; H01M50/491

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2021-192385 A (TEIJIN LIMITED) 16 December 2021 (2021-12-16)<br>claims 1, 6-12, paragraphs [0066], [0070]-[0076], examples | 1-4, 7-12<br>5-6 |
| Y | JP 2020-155248 A (TEIJIN LIMITED) 24 September 2020 (2020-09-24)<br>paragraph [0027] | 1-4, 7-12 |
| Y | JP 2023-097402 A (TORAY INDUSTRIES, INC.) 07 July 2023 (2023-07-07)<br>paragraphs [0044]-[0047], examples | 1-4, 7-12 |
| Y | WO 2019/130994 A1 (TEIJIN LIMITED) 04 July 2019 (2019-07-04)<br>claim 6, paragraph [0151], example A4 | 11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 December 2024** | **14 January 2025** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/039135**

**C. DOCUMENTS CONSIDERED TO BE RELEVANT**

| Category* | Citation of document, with indication, where appropriate, of the relevant passages | Relevant to claim No. |
|---|---|---|
| A | JP 2017-183212 A (TORAY BATTERY SEPERATOR FILM CO., LTD.) 05 October 2017 (2017-10-05)<br>entire text | 1-12 |

Form PCT/ISA/210 (second sheet) (July 2022)

**INTERNATIONAL SEARCH REPORT**
**Information on patent family members**

International application No.
**PCT/JP2024/039135**

| Patent document cited in search report | Publication date (day/month/year) | Patent family member(s) | Publication date (day/month/year) |
| --- | --- | --- | --- |
| JP 2021-192385 A | 16 December 2021 | US 2022/0200098 A1<br>claims 1, 6-12, paragraphs [0113], [0119]-[0125], examples<br>WO 2020/246497 A1<br>EP 3919269 A1<br>EP 4235891 A2<br>KR 10-2021-0136100 A<br>CN 113678312 A | |
| JP 2020-155248 A | 24 September 2020 | US 2022/0190441 A1<br>paragraph [0037]<br>WO 2020/189119 A1<br>EP 3920266 A1<br>KR 10-2021-0124478 A<br>CN 113574728 A | |
| JP 2023-097402 A | 07 July 2023 | (Family: none) | |
| WO 2019/130994 A1 | 04 July 2019 | US 2021/0057703 A1<br>claim 6, paragraph [0205], example A4<br>EP 3734698 A1<br>CN 111492504 A<br>KR 10-2020-0102437 A | |
| JP 2017-183212 A | 05 October 2017 | KR 10-2017-0113145 A<br>CN 107492625 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020246497 A
- JP 2023040938 A
- JP 2019523518 A
- JP 2023188885 A